# EUROPÄISCHE PATENTANMELDUNG

(11) **EP 3 293 594 A1**
(43) Veröffentlichungstag der Anmeldung: **14.03.2018**
(21) Anmeldenummer: 16188584.3
(22) Anmeldetag: 13.09.2016
(51) Int. Cl.: G05B 23/02, B21B 37/00, G05B 13/02

(54) **VERWENDUNG UMFASSENDER KÜNSTLICHER INTELLIGENZ BEI ANLAGEN DER GRUNDSTOFFINDUSTRIE**

(71) Anmelder: Primetals Technologies Germany GmbH, 91052 Erlangen (DE); Primetals Technologies Austria GmbH, 4031 Linz (AT)
(72) Erfinder: Winter, Günther, 91077 Neunkirchen/Brand (DE); Bettinger, Dieter, 4040 Plesching (AT); Herzog, Kurt, 4073 Wilhering (AT); Kuehas, Thomas, 4225 Luftenberg (AT); Kurz, Matthias, 91052 Erlangen (DE); Maierhofer, Andreas, 91080 Marloffstein (DE); Matschullat, Thomas, 90542 Eckental (DE)
(74) Vertreter: Metals@Linz

(57) **Zusammenfassung**

Ein Automatisierungssystem (1) ermittelt Steuerdaten (S'), gibt diese an gesteuerte Elemente (5) der Anlage (ANL) aus und steuert dadurch die Anlage (ANL). Sensoreinrichtungen (2) erfassen Messdaten (M) der Anlage (ANL), die sie zumindest teilweise dem Automatisierungssystem (1) und einer Mensch-Maschine-Schnittstelle (3) zuführen. Die Mensch-Maschine-Schnittstelle (3) nimmt weiterhin Planungsdaten (P) eines Produktionsplanungssystems (11) und/oder von dem Automatisierungssystem (1) Steuerdaten (S') und/oder interne Daten (I) entgegen. Sie gibt die Daten (M, S', I) an eine Person (4) aus. Weiterhin nimmt sie von der Person (4) Steuerbefehle (S) entgegen und leitet sie an das Automatisierungssystem (1) weiter. Das Automatisierungssystem (1) verarbeitet die Messdaten (M) und die Steuerbefehle (S) im Rahmen der Ermittlung der Steuerdaten (S'). Eine Künstliche Intelligenz (9) nimmt die Messdaten (M), die Steuerdaten (S') und/oder die internen Daten (I) und die an die Person (4) ausgegebenen Daten zumindest teilweise entgegen. Sie nimmt ferner die Steuerbefehle (S) entgegen. Die Künstliche Intelligenz (9) ermittelt unter Verwertung der von ihr entgegengenommenen Daten (M, S', I) und Befehle (S) Auswertungsergebnisse (A) und stellt diese der Person (4) und/oder dem Produktionsplanungssystem (11) zur Verfügung und/oder gibt sie direkt oder über die Mensch-Maschine-Schnittstelle (3) dem Automatisierungssystem (1) in Form von Steuerbefehlen (S") vor. Die von der Künstlichen Intelligenz (9) entgegengenommenen Daten (M, S', I) sind zumindest teilweise dimensionale Daten.

## Beschreibung

Die vorliegende Erfindung geht aus von einem Betriebsverfahren für eine Anlage der Grundstoffindustrie,
- wobei ein Automatisierungssystem Steuerdaten ermittelt und an gesteuerte Elemente der Anlage ausgibt und die Anlage dadurch steuert und/oder überwacht,
- wobei Sensoreinrichtungen Messdaten der Anlage erfassen,
- wobei das Automatisierungssystem die Messdaten zumindest teilweise entgegennimmt und die entgegengenommenen Messdaten im Rahmen der Ermittlung der Steuerdaten berücksichtigt,
- wobei eine Mensch-Maschine-Schnittstelle Messdaten der Sensoreinrichtungen und/oder Daten des Automatisierungssystems und/oder Planungsdaten eines Produktionsplanungssystems an eine Person ausgibt und/oder von der Person Steuerbefehle entgegennimmt und an das Automatisierungssystem weiterleitet,
- wobei das Automatisierungssystem die weitergeleiteten Steuerbefehle im Rahmen der Ermittlung der Steuerdaten berücksichtigt,
- wobei eine Künstliche Intelligenz von den Sensoreinrichtungen die Messdaten der Anlage und vom Automatisierungssystem die Steuerdaten und/oder interne Daten des Automatisierungssystems und von der Mensch-Maschine-Schnittstelle die an die Person ausgegebenen Daten zumindest teilweise entgegennimmt und von der Mensch-Maschine-Schnittstelle oder dem Automatisierungssystem die Steuerbefehle entgegennimmt,
- wobei die Künstliche Intelligenz unter Verwertung der entgegengenommenen Daten und Befehle Auswertungsergebnisse ermittelt und die Auswertungsergebnisse über die Mensch-Maschine-Schnittstelle und/oder eine eigenständige Ausgabeeinrichtung der Person zur Verfügung stellt und/oder dem Produktionsplanungssystem für die Anlage der Grundstoffindustrie zur Verfügung stellt und/oder direkt oder über die Mensch-Maschine-Schnittstelle dem Automatisierungssystem in Form von Steuerbefehlen vorgibt.

Die vorliegende Erfindung geht weiterhin aus von einem Computerprogramm, das Maschinencode umfasst, der von einer Recheneinrichtung abarbeitbar ist, wobei die Abarbeitung des Maschinencodes durch die Recheneinrichtung bewirkt, dass die Recheneinrichtung eine Künstliche Intelligenz implementiert, die
- Messdaten, die von Sensoreinrichtungen einer Anlage der Grundstoffindustrie im Betrieb der Anlage der Grundstoffindustrie erfasst werden, Steuerdaten und/oder interne Daten, die von einem die Anlage der Grundstoffindustrie steuernden und/oder überwachenden Automatisierungssystem ermittelt und im Falle der Steuerdaten zur Steuerung der Anlage der Grundstoffindustrie an gesteuerte Elemente der Anlage der Grundstoffindustrie ausgegeben werden, und von einer Mensch-Maschine-Schnittstelle der Anlage der Grundstoffindustrie an eine Person ausgegebene Daten zumindest teilweise entgegennimmt,
- von der Mensch-Maschine-Schnittstelle oder dem Automatisierungssystem von der Mensch-Maschine-Schnittstelle an das Automatisierungssystem weitergeleite Steuerbefehle entgegennimmt,
- unter Verwertung der entgegengenommenen Daten und Befehle Auswertungsergebnisse ermittelt und die Auswertungsergebnisse über die Mensch-Maschine-Schnittstelle und/oder eine eigenständige Ausgabeeinrichtung der Person zur Verfügung stellt und/oder einem Produktionsplanungssystem für die Anlage der Grundstoffindustrie zur Verfügung stellt und/oder direkt oder über die Mensch-Maschine-Schnittstelle dem Automatisierungssystem Steuerbefehle vorgibt.

Die vorliegende Erfindung geht weiterhin aus von einer Recheneinrichtung, wobei die Recheneinrichtung mit einem derartigen Computerprogramm programmiert ist und zur Übermittlung von Informationen zumindest mit einem Automatisierungssystem, Sensoreinrichtungen und einer Mensch-Maschine-Schnittstelle einer Anlage der Grundstoffindustrie verbunden ist.

Die vorliegende Erfindung geht weiterhin aus von einer Anlage der Grundstoffindustrie,
- wobei die Anlage ein Automatisierungssystem aufweist, das Steuerdaten ermittelt und an gesteuerte Elemente der Anlage ausgibt und die Anlage dadurch steuert und/oder überwacht,
- wobei die Anlage Sensoreinrichtungen aufweist, die Messdaten der Anlage erfassen,
- wobei das Automatisierungssystem die Messdaten zumindest teilweise entgegennimmt und die entgegengenommenen Messdaten im Rahmen der Ermittlung der Steuerdaten berücksichtigt,
- wobei die Anlage eine Mensch-Maschine-Schnittstelle aufweist, die Messdaten der Sensoreinrichtungen und/oder Daten des Automatisierungssystems an eine Person ausgibt und/oder von der Person Steuerbefehle entgegennimmt und an das Automatisierungssystem weiterleitet,
- wobei das Automatisierungssystem die weitergeleiteten Steuerbefehle im Rahmen der Ermittlung der Steuerdaten berücksichtigt,
- wobei die Anlage eine derartige Recheneinrichtung aufweist.

Bei der Anlage der Grundstoffindustrie kann es sich - sowohl im Stand der Technik als auch bei der vorliegenden Erfindung - beispielsweise um eine Anlage der Stahlindustrie oder eine Anlage der metallerzeugenden Industrie handeln. Beispiele derartiger Anlagen sind eine Anlage zur Eisenerzeugung wie beispielsweise ein Hochofen oder eine Direktreduktionsanlage, beispielsweise eine Direktreduktionsanlage des Typs Finex, des Typs Corex oder des Typs Midrex, vom Typ Drehrohr oder Drehherd mit oder ohne Submerged Arc Furnace. Weitere Anlagen sind beispielsweise nachgeordnete Einrichtungen, in denen aus Roheisen Stahl erzeugt wird. Beispiele derartiger Anlagen sind ein Lichtbogenofen, ein Konverter und Anlagen, in denen Pfannenprozesse erfolgen wie beispielsweise eine Vakuumbehandlungsanlage. Weitere Anlagen sind der Stahlerzeugung nachgeordnete Einrichtungen, in denen ein Urformen des Metalls und ein Umformen des urgeformten Metalls erfolgen. Beispiele derartiger Anlagen sind eine Stranggießanlage und Walzwerke. Bei den Walzwerken kann es sich beispielsweise um ein Walzwerk zum Walzen eines flachen Walzguts wie beispielsweise eine Vorstraße, eine Fertigstraße, ein Steckelwalzwerk und andere mehr handeln. Weiterhin kann es sich bei den Walzwerken um ein Walzwerk zum Walzen eines anderen Querschnitts handeln, beispielsweise eines Knüppelquerschnitts. Bei dem Walzwerk kann es sich alternativ um ein Walzwerk zum Warmwalzen von Metall, ein Walzwerk zum Kaltwalzen von Metall oder ein kombiniertes Walzwerk handeln, in dem das Metall zunächst warm- und sodann kaltgewalzt wird. Auch eine Kühlstrecke - gegebenenfalls in Kombination mit einem Walzwerk - kann als Anlage der Stahlerzeugung angesehen werden. Auch andere einem Walzwerk vor- oder nachgeordnete Anlagen kommen in Frage, beispielsweise eine Glühe oder eine Beize.

Anlagen der Grundstoffindustrie verfügen in aller Regel über eine Prozessautomatisierung. Die Prozessautomatisierung umfasst meist mehrere Levels. Level 0 wird von der Sensorik und der Aktorik gebildet. Level 1 ist die sogenannte Basisautomatisierung, welche die Regelkreise implementiert. Level 2 enthält die technologische Automatisierung, welche die Prozessmodelle umfasst und die Sollwerte für die Regelkreise ermittelt. Es sind auch weitere Levels bekannt, die beispielsweise die Produktionsplanung betreffen.

Der Betrieb der Anlagen der Grundstoffindustrie ist in der Regel zwar hochautomatisiert, aber nicht vollständig automatisiert. Insbesondere besteht für eine Person stets die Möglichkeit, bei besonderen Situationen wie beispielsweise Störungen in die automatische Steuerung der Anlage einzugreifen. Der Eingriff erfolgt mit dem Ziel, einen sicheren Anlagenbetrieb aufrechtzuerhalten und negative Folgen auf die Produktion als solche, die Produktivität der Anlage und die Produktqualität möglichst zu vermeiden. Da die Eingriffe durch die Person noch erforderlich sind, ist die Robustheit der Prozessautomatisierung gegen Störungen und bei Abweichungen vom regulären Betrieb noch nicht hinreichend ausgebildet, um einen vollautomatischen Betrieb gewährleisten zu können.

Zur Verbesserung des Betriebs ist es bekannt, Künstliche Intelligenz beispielsweise in Form eines neuronalen Netzes in die Prozessautomatisierung einzubinden. Die Künstliche Intelligenz enthält auch das Wissen über die situationsabhängigen manuellen Bedieneingriffe der Person. Durch den Einsatz einer derartigen Künstlichen Intelligenz kann die automatisierte Steuerung der Anlage der Grundstoffindustrie verbessert werden. Auf diese Verbesserung führt jedoch noch nicht zu einem vollautomatischen Betrieb. Auch heute noch sind daher Steuereingriffe des Bedienpersonals erforderlich.

In jüngerer Zeit hat sich weiterhin herausgestellt, dass bei vielen Anlagen der Grundstoffindustrie das Fachwissen und Expertenwissen nicht oder nur unzureichend gespeichert und dokumentiert ist, sondern sich zum Großteil in den Köpfen der Personen befindet. Eine Dokumentation erweist sich insbesondere deshalb als schwierig, weil die Bedienpersonen oftmals intuitiv aufgrund ihrer Erfahrung reagieren, ohne sich jemals bewusst zu machen, warum sie so und nicht anders reagieren. Derartiges oftmals intuitives Wissen kann auch mittels der bisher verwendeten Künstlichen Intelligenz nicht gelernt werden.

Die Aufgabe der vorliegenden Erfindung besteht darin, Möglichkeiten zu schaffen, den Betrieb der Anlage der Grundstoffindustrie nicht nur in normalen Betriebszuständen, sondern auch in außergewöhnlichen Betriebszuständen automatisieren zu können. Im Idealfall soll jeglicher Steuerungseingriff vermieden werden können. Zumindest soll die Anzahl an Steuerungseingriffen jedoch reduziert werden.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 15.

Erfindungsgemäß wird ein Betriebsverfahren der eingangs genannten Art dadurch ausgestaltet, dass die von der Künstlichen Intelligenz entgegengenommenen Daten zumindest teilweise dimensionale Daten sind.

Dimensionale Daten im Sinne der vorliegenden Erfindung sind gleichartige Daten, die in mindestens einer Dimension sequenziell aufeinanderfolgen. Es kann sich bei der Dimension um eine örtliche Dimension handeln. In diesem Fall bilden die dimensionalen Daten beispielsweise eine örtliche Verteilung, beispielsweise eine Temperaturverteilung. Die Verteilung kann eindimensional, zweidimensional oder dreidimensional sein. Auch eine Fouriertransformierte des Ortes ist als Dimension zu verstehen. Alternativ kann es sich bei der Dimension um eine zeitliche Dimension handeln. In diesem Fall bilden die dimensionalen Daten beispielsweise einen zeitlichen Verlauf, beispielsweise einen Temperaturverlauf. Auch eine Fouriertransformierte der Zeit ist als Dimension zu verstehen. Ein Beispiel ist ein Frequenzspektrum. Weiterhin ist auch eine Kombinationen (mindestens) einer örtlichen Dimension mit einer zeitlichen Dimension möglich, also beispielsweise der zeitliche Verlauf einer örtlichen Verteilung.

Die obenstehende Nennung der Temperatur ist nur beispielhaft. Anstelle der Temperatur können auch andere Größen verwertet werden, beispielsweise ein Druck- oder Zugverlauf und/oder eine entsprechende Verteilung. Auch ein Balligkeitsverlauf über die Bandbreite oder die Länge des Walzenballens einer Walze eines Walzgerüsts - gegebenenfalls zusätzlich als zeitlicher Verlauf - ist möglich. Ebenso können andere Größen herangezogen werden.

Aufgrund der Auswertung dimensionaler Daten kann insbesondere auch eine Auswertung komplexer Sachverhalte erfolgen.

In einer bevorzugten Ausgestaltung ist vorgesehen, dass die dimensionalen Daten sich in mindestens zwei Dimensionen - insbesondere in mindestens zwei örtlichen Dimensionen - erstrecken und dass die Künstliche Intelligenz im Rahmen der Ermittlung der Auswertungsergebnisse für die dimensionalen Daten Kurven gleichen Wertes und/oder Gradienten ermittelt, im Falle von Temperaturen beispielsweise Isothermen oder Temperaturgradienten.

Als besonderes Beispiel können die dimensionalen Daten ein über die Mensch-Maschine-Schnittstelle an die Person ausgegebenes Bild, eine zeitliche Sequenz derartiger Bilder, einen Teil eines derartigen Bildes oder eine zeitliche Sequenz eines derartigen Teils umfassen. Das Bild kann ein optisches oder ein Infrarot-Bild sein. Die Bilder können beispielsweise in Form von Pixel-Arrays, als 2D-Flächen oder als 3D-Volumina vorliegen. Auch eine Vorgabe von örtlichen oder zeitlichen Kurven ist möglich.

Alternativ oder zusätzlich können die dimensionalen Daten eine akustische Schwingung oder ein Spektrum einer derartigen Schwingung umfassen.

Alternativ oder zusätzlich können die dimensionalen Daten vom Automatisierungssystem anhand eines Modells errechnete Daten umfassen. Beispiele derartiger Daten sind ein errechneter Temperaturverlauf oder eine errechnete Temperaturverteilung eines Metallbandes in einer Fertigstraße oder in einer Kühlstrecke. Gegebenenfalls kann zusätzlich auch die Berücksichtigung der Phase des Metallbandes erfolgen. Auch andere errechnete Daten können verwendet werden, beispielsweise nicht direkt messbare, sondern mittels eines sogenannten Softsensors errechnete Daten.

Künstliche Intelligenz ist - allgemein gesprochen - eine durch eine Recheneinrichtung implementierte Einheit, die auf Außenstehende wie eine menschliche Intelligenz wirkt. Künstliche Intelligenz umfasst insbesondere Maschinenlernen (Machine learning), maschinelles Sehen und Erkennen von Objekten (Computer Vision), Sprachverarbeitung und Robotik. Maschinenlernen ist eine Künstliche Intelligenz, die anhand einer Vielzahl von Situationen oder Verläufen nebst zugehöriger Bewertung (oder einem Kriterium zur Ermittlung der Bewertung) selbst lernen kann, wie sie sich verhalten muss, um eine möglichst hohe Bewertung zu erlangen. Die Bewertung kann entweder der Künstlichen Intelligenz vorgegeben werden oder von der Künstlichen Intelligenz anhand eines der Künstlichen Intelligenz bekannten Bewertungskriteriums eigenständig ermittelt werden. Die Künstliche Intelligenz akkumuliert und enthält somit das Wissen über einen der jeweiligen Situation angepassten, optimalen Betrieb der Anlage der Grundstoffindustrie. Maschinelles Sehen und Erkennen von Objekten ist insbesondere das Extrahieren der Objekte in Bildern und deren Zuordnung zu einer allgemeinen Kategorie. Objekte sind in diesem Zusammenhang zweidimensionale Elemente, die ohne Beeinflussung anderer Elemente bewegt werden können. Sprachverarbeitung umfasst insbesondere das selbstständige Erkennen von Worten und im Rahmen der vorliegenden Erfindung auch allgemein die Analyse von akustischen Schwingungen.

Es ist möglich, dass die Künstliche Intelligenz vorab trainiert wird. Es ist sogar möglich, dass die Künstliche Intelligenz ausschließlich vorab trainiert wird und im Rahmen des Betriebsverfahrens unverändert bleibt. Ihre volle Stärke zeigt die vorliegende Erfindung jedoch in dem Fall, dass die Künstliche Intelligenz parallel zur Ermittlung der Auswertungsergebnisse eine Bewertung der Auswertungsergebnisse ermittelt und sich selbst anhand der Bewertung nachtrainiert. Denn dadurch erfolgt nach und nach eine immer bessere Auswertung der von der Künstlichen Intelligenz entgegengenommenen Daten und Befehle.

Datenquellen für das Lernen können insbesondere das Automatisierungssystem, die Sensoreinrichtungen und die Mensch-Maschine-Schnittstelle sein.

Die Daten umfassen - sowohl zum Lernen als auch im späteren Betrieb - zumindest die dimensionalen Daten. Zusätzlich können auch singuläre Daten - das heißt einzelne Werte (im Gegensatz zu sequenziell aufeinanderfolgenden Werten) - verwertet werden.

Die zur Anwendung kommende Künstliche Intelligenz kann nach Bedarf und je nach Anwendungsfall bestimmt werden. Die Art der künstlichen Intelligenz kann hierbei verschiedener Natur sein. Beispielsweise kann die Künstliche Intelligenz als Künstliches Neuronales Netz oder Netzwerk (artificial neural network), als Stützvektormaschine (Support Vector Maschine), als Entscheidungsbaum (Decision Tree), als Bayes'sches Zuverlässigkeitsnetzwerk (Bayesian belief network), als sogenannte k-nächste Nachbarn, als sich selbst organisierende Karte (self-organizing map), als fallorientierte Überlegung (casebased reasoning), als fallorientiertes Lernen (instance-based learning) oder als sogenanntes hidden Markov-Modell ausgebildet sein. Auch Kombinationen derartiger Ausgestaltungen sind möglich.

In einer bevorzugten Ausgestaltung der vorliegenden Erfindung ist die Künstliche Intelligenz als künstliches neuronales Netz ausgebildet, insbesondere als tiefes neuronales Netz oder als faltendes neuronales Netz (DNN = deep neural network, CNN = convoluntional neural network). Mit einer derartigen Künstlichen Intelligenz können insbesondere dimensionale Daten wie Bilddaten oder akustische Schwingungen gut verarbeitet werden. Es ist auch möglich, die Künstliche Intelligenz mit mehreren neuronalen Netzen auszugestalten, wobei verschiedene Netztypen zur Anwendung kommen, beispielsweise mindestens ein normales neuronales Netz mit nur einer oder zwei verborgenen Schichten von Neuronen und zusätzlich mindestens ein neuronales Netz vom Typ DNN oder CNN. Insbesondere die letztgenannten neuronalen Netze eignen sich auch für eine Trajektoriensteuerung.

Neuronale Netzwerke basieren auf einem System von Knotenpunkten (= Neuronen), die über unterschiedliche Leitungen mit Gewichtungsfaktoren aufeinander wirken. Die Neuronen sind in Schichten angeordnet. Ein neuronales Netzwerk weist eine Eingabeschicht, eine Ausgabeschicht und mindestens eine versteckte Schicht (hidden layer) von Neuronen auf. Über die Eingabeschicht gelangen Daten in das neuronale Netzwerk, über die Ausgabeschicht können die Antworten und Ergebnisse des Neuronalen Netzwerks abgegriffen werden. Die Wissensspeicherung erfolgt in den verdeckten Schichten. Das Lernen erfolgt durch Veränderungen der Gewichte, mit denen die Neuronen aufeinander wirken. Ein derartiges Lernen wird oftmals auch als Trainieren bezeichnet.

Die Begriffe "tiefes neuronales Netz" und "faltendes neuronales Netz" haben für den Fachmann auf dem Gebiet der Computertechnik eine fest definierte Bedeutung. Insbesondere ist ein tiefes neuronales Netz ein neuronales Netz, bei dem mindestens drei versteckte Schichten von Neuronen vorhanden sind. Dies steht im Gegensatz zu einem normalen oder flachen Neuronalen Netzwerk, bei dem maximal zwei verdeckte Schichten vorhanden sind. Oftmals ist bei einem normalen Neuronalen Netzwerk sogar nur eine einzige verdeckte Schicht vorhanden. Ein tiefes neuronales Netz ermöglicht insbesondere die Speicherung von komplexen Zusammenhängen und damit die Analyse von komplexen Aufgabenstellungen. Ein faltendes neuronales Netz (CNN) ist eine weitere sehr verbreitete besondere Form eines neuronalen Netzes. Es eignet sich besonders zur Verarbeitung von dimensionalen Daten. Ein derartiges neuronales Netz besteht aus einer Eingangsschicht, mehreren sich abwechselnden Convolutional und Subsampling Schichten (Versteckte Schichten) und einer Ausgangschicht. Das Netzwerk wird in die Bereiche Input, Feature Extraktion und Classification unterteilt. Zunächst werden die Eingangsdaten mittels einer Convolutional Schicht gefaltet. Dabei werden die Informationen von benachbarten Datenpunkten gebündelt an die nächste Schicht weitergegeben. Die korrespondierenden Datenpunkte des Eingangsmatrix werden mit den Koeffizienten eines Faltungskerns multipliziert. Aus der Summe ein neuer Datenpunkt in der jeweils nächsten Schicht gebildet. Dadurch erhält man mehrere parallele Faltungen, die eine Generalisierung bewirken. Dies resultiert in mehreren voneinander unabhängigen feature maps. Eine nachfolgende Subsamplingsschicht kann die feature maps weiter komprimieren, beispielsweise halbieren. Jede nachfolgende Convolutional Schicht kann dann weitere feature maps enthalten. Die letzte Convolution- bzw. Subsamplingsschicht wird mit den Neuronen einer Klassifikationsschicht voll verbunden, d.h. jedes Neuron ist mit jeder feature map verbunden. Die Ausgangsschicht liefert das Ergebnis der Analyse. Bei einem faltenden neuronalen Netz werden im Gegensatz zu einem normalen neuronalen Netzwerk anstatt der Gewichte der Verbindungen zwischen den Neuronen die Koeffizienten der Faltungskerne bestimmt. Hierfür kann beispielsweise ein an sich bekannter Backpropagation-Lern-Algorithmus angewendet werden. Ein faltendes neuronales Netz ist ein Spezialfall eines tiefen neuronalen Netzes. Es nutzt insbesondere den Umstand aus, dass relevante Zusammenhänge und damit Verbindungen oftmals nur zwischen örtlich und/oder zeitlich nahe benachbarten Größen bestehen. Derartige Strukturen sind insbesondere von Vorteil, um zunehmend abstrakte, lokalisierte Darstellungen eines Bildes zu konstruieren. Insbesondere für die Verarbeitung von dimensionalen Eingangsdaten - so wie vorstehend erläutert - sind derartige neuronale Netze von Vorteil. Eine Beschreibung eines faltenden neuronalen Netzes findet sich beispielsweise in dem Fachaufsatz "Deep learning" von Yann LeCun et al., veröffentlicht in Nature, Band 521, 28.05.2015, Seiten 436 bis 444.

Der Vorteil derartiger neuronaler Netze ist der reduzierte Zeitaufwand für den Lernvorgang. Dadurch werden auch sehr große neuronale Netzwerke, die beispielsweise 5, 8 oder 10 verborgenen Schichten (oder noch mehr verborgenen Schichten) aufweisen und insgesamt 10⁴ oder 10⁵ Neuronen aufweisen, mit einem in der Praxis vertretbaren Zeitaufwand (in der Regel nur wenige Stunden) trainierbar. Möglich wird dies unter anderem durch die Verfügbarkeit von parallel arbeitender Software und Hardware, beispielsweise in einer oder mehreren GPUs (GPU = graphical processing unit).

Ein weiteres, für die Implementierung der vorliegenden Erfindung gut geeignetes neuronales Netz ist ein sogenanntes RNN = recurrent neural network. Ein derartiges neuronales Netz eignet sich insbesondere für Daten, die als zeitliche Abfolge vorliegen.

Es ist auch möglich, unterschiedliche Architekturen miteinander zu kombinieren, z.B. ein CNN und ein RNN.

Die nachfolgenden Ausführungen werden allgemein für die von der Künstlichen Intelligenz entgegengenommenen Daten getroffen. Es ist möglich, dass diese Ausführungen nur für einen Teil der Daten zu treffen. Sie gelten jedoch zumindest für einen Teil der dimensionalen Daten.

Vorzugsweise sind die von der Künstlichen Intelligenz entgegengenommenen Daten und/oder deren Bezug in der Dimension einheitslos oder werden von der Künstlichen Intelligenz in derartige Daten umgewandelt. Beispielsweise können Abmessungen in Bandbreitenrichtung eines Metallbandes - vorzugsweise ausgehend von der Mitte des Metallbandes - auf die Breite des Metallbandes normiert sein. Ähnliche Vorgehensweisen sind für andere Dimensionen des Metallbandes möglich. Auch können beispielsweise bei auf Walzen eines Walzgerüsts bezogenen Angaben der jeweilige Ort - vorzugsweise ausgehend von der Ballenmitte - auf die Ballenlänge der jeweiligen Walze normiert sein. Orte innerhalb eines Bildes können beispielsweise auf die Gesamtabmessungen des jeweiligen Bildes normiert sein. Auch hier ist der Referenzbezug vorzugsweise die Mitte des Bildes. Eine Graustufe eines Pixelwertes kann auf einen Wert zwischen 0 und 1 (oder alternativ zwischen -0,5 und +0,5) normiert sein. In analoger Weise kann auch ein Stellbereich eines Stellgliedes normiert sein. Auch andere Normierungen sind möglich. Es ist auch möglich, zur Ermittlung einheitsloser Größen verschiedene Größen miteinander zu kombinieren. Beispiele sind eine Normierung von chemischen Analysen, Temperaturen, Wärmeübergängen und Strömungen.

Durch diese Ausgestaltung ist es auf einfache Weise möglich, das in der Künstlichen Intelligenz für eine bestimmte Anlage der Grundstoffindustrie gespeicherte Wissen auf eine andere, gleichartige Anlage der Grundstoffindustrie zu transferieren.

In einer konkreten Ausgestaltung ist es beispielsweise möglich, dass die von der Künstlichen Intelligenz entgegengenommenen Daten
- ein Profil eines flachen Walzguts vor einer Ausführung einer Mehrzahl von Walzstichen, mit denen ein flaches Walzgut nacheinander gewalzt wird,
- für die Mehrzahl an Walzstichen die jeweiligen Stichplandaten und die jeweilige Kontur des Walzspaltes und/oder der Walzenballen der Arbeitswalzen des den jeweiligen Walzstich ausführenden Walzgerüsts sowie
- Profil und/oder Planheit des flachen Walzguts nach der Ausführung der Mehrzahl von Walzstichen umfassen und dass die von der Künstlichen Intelligenz ermittelten Auswertungsergebnisse eine Strategie zum Verschieben der Arbeitswalzen und/oder von Zwischenwalzen der die jeweiligen Walzstiche ausführenden Walzgerüste für einen nachfolgenden Walzvorgang eines weiteren flachen Walzguts umfassen. Durch diese Vorgehensweise können die Kontur und/oder die Planheit von gewalzten Metallbändern optimiert werden. Alternativ oder zusätzlich können durch diese Vorgehensweise das Walzprogramm flexibler gestaltet werden und/oder die Standzeiten von Walzen von Walzgerüsten maximiert werden.

Alternativ oder zusätzlich ist es beispielsweise möglich, dass die von der Künstlichen Intelligenz entgegengenommenen Daten
- für eine Mehrzahl von Walzgerüsten, mittels derer ein flaches Walzgut nacheinander gewalzt wird, die jeweiligen Stichplandaten und die jeweilige Kontur des Walzspaltes des jeweiligen Walzgerüsts und/oder der Walzenballen der Arbeitswalzen des jeweiligen Walzgerüsts sowie
- Profil und/oder Planheit des flachen Walzguts nach dem Durchlaufen der Mehrzahl von Walzgerüsten umfassen und dass die von der Künstlichen Intelligenz ermittelten Auswertungsergebnisse eine Strategie zum segmentierten Kühlen von Walzen mindestens eines der Walzgerüste und/oder eine Strategie für eine Arbeitswalzenverschiebung und/oder eine Strategie für eine Arbeitswalzenrückbiegung umfassen. Auch durch diese Vorgehensweise können die Kontur und/oder die Planheit von gewalzten Metallbändern optimiert werden, Walzprogramme flexibler gestaltet werden und Standzeiten von Walzgerüsten maximiert werden.

Weiterhin ist es beispielsweise möglich, dass die von der Künstlichen Intelligenz entgegengenommenen Daten mindestens ein Bild, anhand dessen die laterale Position eines Metallbandes zwischen zwei Walzgerüsten einer mehrgerüstigen Walzstraße ermittelbar ist, und eine Differenzstellgröße des stromaufwärts gelegenen der beiden Walzgerüste umfassen und dass die von der Künstlichen Intelligenz ermittelten Auswertungsergebnisse eine Strategie zum Steuern des Bandlaufs umfassen. Insbesondere die Steuerung der lateralen Position ist im Stand der Technik oftmals schwierig und erfolgt oft noch manuell. Hier kann durch die vorliegende Erfindung Abhilfe geschaffen werden.

In einer weiteren Ausgestaltung ist es beispielsweise möglich, dass die von der Künstlichen Intelligenz entgegengenommenen Daten einen Verschleiß eines Bauelements der Anlage der Grundstoffindustrie beschreibende dimensionale Daten umfassen und dass die von der Künstlichen Intelligenz ermittelten Auswertungsergebnisse eine Vorhersage einer Restlaufzeit des Bauelements der Anlage der Grundstoffindustrie umfassen. Das Bauelement kann beispielsweise eine Arbeitswalze eines Walzgerüsts sein. In diesem Fall umfassen die von der Künstlichen Intelligenz entgegengenommenen Daten eine Walzenballenkontur als Funktion der Walzenreise der Arbeitswalze sowie die Stichplandaten des Walzgerüsts. Anhand dieser Daten kann von der künstlichen Intelligenz vorhergesagt werden, wann die jeweilige Arbeitswalze (in der Regel zusammen mit der anderen Arbeitswalze des betreffenden Walzgerüsts, also als Satz von Arbeitswalzen) gewechselt werden muss. Diese Vorhersage kann beispielsweise zur Anpassung und Optimierung der Produktionsplanung verwendet werden.

In einer weiteren Ausgestaltung ist es beispielsweise möglich, dass die von der Künstlichen Intelligenz entgegengenommenen Daten
- mindestens einen Massenstrom und/oder mindestens einen Volumenstrom eines einem Konvertergefäß zugeführten Stoffes als Funktion der Zeit,
- eine Position einer im Konvertergefäß befindlichen Lanze als Funktion der Zeit,
- eine Kühlwassertemperatur des Konvertergefäßes als Funktion der Zeit,
- eine Menge und/oder eine Zusammensetzung eines aus dem Konvertergefäß austretenden Abgases als Funktion der Zeit,
- mindestens eine aus dem Bereich des Konvertergefäßes stammende akustische Schwingung und/oder deren Spektrum,
- mindestens ein den Bereich eines Konverterhutes enthaltenes Bild (sichtbares Spektrum oder Infrarot),
- dimensionale Modelldaten aus einem physikalisch-chemischen Modell eines im Konvertergefäß befindlichen Metalls und/ oder hiermit korrespondierende vorab bestimmte Vergleichsdaten und/oder
- eine ortsaufgelöste Darstellung eines Konverterfutterzustands
umfassen und dass die von der Künstlichen Intelligenz ermittelten Auswertungsergebnisse eine Vorhersage über eine Wahrscheinlichkeit, einen Zeitpunkt, ein Ausmaß eines zu erwartenden Auswurfs (slopping) aus dem Konvertergefäß, einen zu erwartenden Endgehalt an Sauerstoff und/oder Kohlenstoff des im Konvertergefäß befindlichen Metalls, eine für einen Abstichzeitpunkt prognostizierte Temperatur des im Konvertergefäß befindlichen Metalls, ein Ergebnis eines im Konvertergefäß erfolgenden Entphosphorungsprozesses und/oder metallurgische Größen während eines Blasvorgangs innerhalb des Konvertergefäßes umfassen.

In der Praxis dürfte es vermutlich von Vorteil sein, die der Künstlichen Intelligenz zugeführten dimensionalen Daten vor dem Zuführen zur Künstlichen Intelligenz in einer Vorverarbeitungseinrichtung vorzuverarbeiten. Weiterhin dürfte es - alternativ oder zusätzlich zur Vorverarbeitung - von Vorteil sein, die von der Künstlichen Intelligenz ermittelten Auswertungsergebnisse zunächst in einer Auswertungseinrichtung auszuwerten und/oder mittels einer Optimierungseinrichtung die Auswertungsergebnisse im Sinne einer Optimierung auszuwerten und erst dann der Person und/oder dem Produktionsplanungssystem zur Verfügung zu stellen und/oder dem Automatisierungssystem vorzugeben.

Die Aufgabe wird weiterhin durch ein Computerprogramm mit den Merkmalen des Anspruchs 16 gelöst. Eine vorteilhafte Ausgestaltung des Computerprogramms ist Gegenstand des abhängigen Anspruchs 17.

Erfindungsgemäß wird ein Computerprogramm der eingangs genannten Art dadurch ausgestaltet, dass die von der Künstlichen Intelligenz entgegengenommenen Daten zumindest teilweise dimensionale Daten sind.

In der bevorzugten Ausgestaltung des Computerprogramms bewirkt die Abarbeitung des Maschinencodes durch die Recheneinrichtung, dass die von der Recheneinrichtung implementierte Künstliche Intelligenz die obenstehend erläuterten vorteilhaften Ausgestaltungen des Betriebsverfahrens implementiert.

Die Aufgabe wird weiterhin durch eine Recheneinrichtung mit den Merkmalen des Anspruchs 18 gelöst. Erfindungsgemäß ist eine Recheneinrichtung der eingangs genannten Art mit einem erfindungsgemäßen Computerprogramm programmiert. Bei der Recheneinrichtung kann es sich alternativ um einen einzelnen Rechner oder um eine Gruppe von Rechnern handeln. Die Rechner können CPUs und/oder GPUs umfassen. Sie können - alternativ oder zusätzlich - auch spezielle, anwendungsspezifische Schaltkreise umfassen, beispielsweise FPGAs (= field programmable gate array). Auch eine (alternative oder zusätzliche) Verwendung einer TPU (= tensor processing unit) oder mehrerer TPUs ist möglich.

Im Regelfall wird Recheneinrichtung sich im Bereich der Anlage der Grundstoffindustrie befinden und der Anlage fest zugeordnet sein. Es ist jedoch auch denkbar, die Recheneinrichtung vollständig oder teilweise an einem entfernten Ort anzuordnen, beispielsweise bei einem Hersteller der Anlage der Grundstoffindustrie oder "irgendwo" in einer Cloud.

Die Aufgabe wird weiterhin durch eine Anlage der Grundstoffindustrie mit den Merkmalen des Anspruchs 19 gelöst. Erfindungsgemäß weist die Anlage eine erfindungsgemäße Recheneinrichtung auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: den strukturellen Aufbau einer Anlage der Grundstoffindustrie,
- FIG 2: eine Künstliche Intelligenz und mögliche der Künstlichen Intelligenz zugeführte Eingangsdaten,
- FIG 3: eine mögliche Ausgestaltung einer Künstlichen Intelligenz,
- FIG 4: eine weitere mögliche Ausgestaltung einer Künstlichen Intelligenz,
- FIG 5: ein Beispiel einer Umwandlung einheitenbehafteter Größen in einheitenlose Größen,
- FIG 6 bis 10: mögliche konkrete Anwendungen der Künstlichen Intelligenz und
- FIG 11: eine Einbindung einer Künstlichen Intelligenz in ein übergreifendes Datenverarbeitungskonzept.

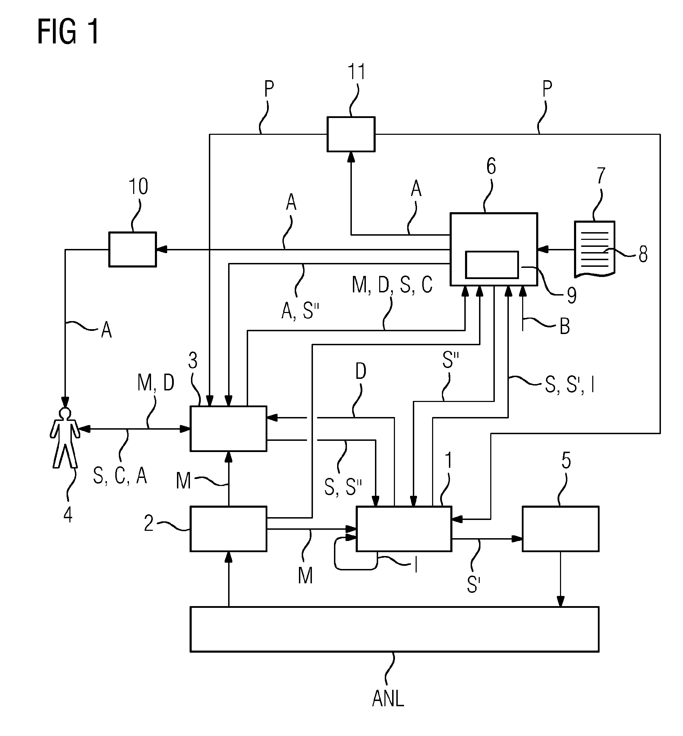

Gemäß FIG 1 weist eine - prinzipiell beliebige - Anlage ANL der Grundstoffindustrie ein Automatisierungssystem 1, Sensoreinrichtungen 2 und eine Mensch-Maschine-Schnittstelle 3 auf. Das Automatisierungssystem 1 kann hierbei unter anderem ein PDA-System (PDA = Process Data Acquisition) mit beinhalten. Ein PDA-System speichert erfasste Prozessdaten im Sinne einer Historie ab, so dass auch nachträglich noch auf früher angefallene Prozessdaten zugegriffen werden kann. Dadurch kann insbesondere beispielsweise im Rahmen einer Fehlersuche eine Ermittlung der zugrunde liegenden Ursache erfolgen. Ferner stehen dadurch von allen Prozessgrößen auch die bisherigen zeitlichen Verläufe zur Verfügung.

Die Sensoreinrichtungen 2 erfassen Messdaten M der Anlage ANL. Die Messdaten M können einzelne Werte sein wie beispielsweise eine singuläre Temperatur oder eine singuläre Geschwindigkeit oder eine singuläre Kraft. Alternativ kann es sich um dimensionale Daten handeln wie beispielsweise einen zeitlichen Temperaturverlauf oder eine örtliche Temperaturverteilung. Auch andere Größen kommen in Frage. Die mittels der Sensoreinrichtungen 2 erfassten Messdaten M werden zumindest teilweise dem Automatisierungssystem 1 zugeführt, das die ihm zugeführten Messdaten M entgegennimmt. Die mittels der Sensoreinrichtungen 2 erfassten Messdaten M werden weiterhin zumindest teilweise an die Mensch-Maschine-Schnittstelle 3 übermittelt. Die Mensch-Maschine Schnittstelle 3 gibt die an sie übermittelten Messdaten M an eine Person 4 aus. Die Person kann beispielsweise eine Bedienperson der Anlage ANL der Grundstoffindustrie, ein Monteur, ein Inbetriebnehmer oder eine andere Person sein oder zum Wartungspersonal gehören.

Es ist möglich, dass alle von den Sensoreinrichtungen 2 erfassten Messdaten M sowohl dem Automatisierungssystem 1 als auch der Mensch-Maschine-Schnittstelle 3 zugeführt werden. In der Regel wird jedoch nur ein Teil der von den Sensoreinrichtungen 2 erfassten Messdaten M sowohl dem Automatisierungssystem 1 als auch der Mensch-Maschine-Schnittstelle 3 zugeführt. In der Regel werden andere der von den Sensoreinrichtungen 3 erfassten Messdaten M ausschließlich dem Automatisierungssystem 1, nicht aber auch der Mensch-Maschine-Schnittstelle 3 zugeführt. Bei wieder anderen von den Sensoreinrichtungen 2 erfassten Messdaten M kann es umgekehrt sein.

Die Mensch-Maschine-Schnittstelle 3 nimmt weiterhin von dem Automatisierungssystem 1 Daten D entgegen und gibt sie an die Person 4 aus. Weiterhin nimmt die Mensch-Maschine-Schnittstelle 3 von der Person 4 Steuerbefehle S entgegen. Die entgegengenommenen Steuerbefehle S leitet die Mensch-Maschine-Schnittstelle 3 an das Automatisierungssystem 1 weiter.

Das Automatisierungssystem 1 ermittelt anhand der ihm zur Verfügung stehenden Informationen Steuerdaten S'. Die Steuerdaten S' gibt das Automatisierungssystem 1 an gesteuerte Elemente 5 der Anlage ANL aus. Dadurch wird die Anlage ANL von dem Automatisierungssystem 1 gesteuert und/oder überwacht. Im Rahmen der Ermittlung der Steuerdaten S' berücksichtigt das Automatisierungssystem 1 sowohl die entgegengenommenen Messdaten M als auch die von der Mensch-Maschine-Schnittstelle 3 weitergeleiteten Steuerbefehle S. Das Automatisierungssystem 1 berücksichtigt im Rahmen der Ermittlung der Steuerdaten S' oftmals auch interne Daten I, d.h. Daten, die nur innerhalb des Automatisierungssystem 1 vorliegen. Diese internen Daten I werden (im Rahmen des Steuerungsprozesses als solchem) von dem Automatisierungssystem 1 weder von außen entgegengenommen noch nach außen abgegeben. Es kann sich beispielsweise um Daten handeln, die von dem Automatisierungssystem 1 modellgestützt ermittelt werden. Auch kann es sich um Daten handeln, die von dem Automatisierungssystem 1 ohne Modellbildung lediglich mitgerechnet werden, beispielsweise Werte von Timern oder Merkern. Die Informationen, anhand derer das Automatisierungssystem 1 die Steuerdaten S' ermittelt, können beispielsweise Planungsdaten P umfassen, die dem Automatisierungssystem von einem Produktionsplanungssystem 11 übermittelt werden.

Die Anlage ANL weist weiterhin eine Recheneinrichtung 6 auf. Die Recheneinrichtung 6 ist zur Übermittlung von Informationen mit dem Automatisierungssystem 1, den Sensoreinrichtungen 2 und der Mensch-Maschine-Schnittstelle 3 verbunden. Die Recheneinrichtung 6 ist mit einem Computerprogramm 7 programmiert. Das Computerprogramm 7 umfasst Maschinencode 8, der von der Recheneinrichtung 6 abarbeitbar ist. Die Abarbeitung des Maschinencodes 8 durch die Recheneinrichtung 6 bewirkt, dass die Recheneinrichtung 6 eine Künstliche Intelligenz 9 implementiert. Gemäß den nachstehenden Ausführungen ist die Künstliche Intelligenz 9 als neuronales Netz ausgebildet. Die Künstliche Intelligenz könnte jedoch auch als Stützvektormaschine, als Entscheidungsbaum, als Bayes'sches Zuverlässigkeitsnetzwerk, als sich selbst organisierende Karte, als fallorientierte Überlegung, als fallorientiertes Lernen, als sogenanntes hidden Markov-Modell oder als sogenannte k-nächste Nachbarn ausgebildet sein.

Die Künstliche Intelligenz 9 arbeitet wie folgt:

Die Künstliche Intelligenz 9 nimmt - zumindest teilweise - entgegen:
- von den Sensoreinrichtungen 2 die Messdaten M der Anlage ANL,
- vom Automatisierungssystem 1 die Steuerdaten S' und/oder die internen Daten I und
- von der Mensch-Maschine-Schnittstelle 3 die an die Person 4 ausgegebenen Daten.

Die Künstliche Intelligenz 9 nimmt weiterhin von der Mensch-Maschine-Schnittstelle 3 oder dem Automatisierungssystem 1 die Steuerbefehle S entgegen.

Unter Verwertung der entgegengenommenen Daten M, S', I und Befehle S ermittelt die Künstliche Intelligenz 9 Auswertungsergebnisse A. Die Auswertungsergebnisse A gibt die Künstliche Intelligenz 9 aus. Beispielsweise kann die Künstliche Intelligenz 9 die Auswertungsergebnisse A über die Mensch-Maschine-Schnittstelle 3 und/oder eine eigenständige Ausgabeeinrichtung 10 der Person 4 zur Verfügung stellen. Die eigenständige Ausgabeeinrichtung 10 kann beispielsweise als Smartphone oder dergleichen ausgebildet sein. Alternativ oder zusätzlich kann die Künstliche Intelligenz 9 die Auswertungsergebnisse A dem Produktionsplanungssystem 11 zur Verfügung stellen. Beispielsweise können die Auswertungsergebnisse A der Künstlichen Intelligenz 9 die Wiedergabe von digital abgespeichertem Wissen sein. Unter digital abgespeichertem Wissen wird Fachwissen verstanden, das Bedienpersonen 4 über lange Jahre aufgebaut haben, das jedoch zuvor nicht dokumentiert worden ist, sich also (bisher) nur in den Köpfen der Bedienpersonen 4 befindet. Es kann sich auch um Wissen handeln, das aus der Bedienung und/oder dem Betrieb der Anlage ANL der Grundstoffindustrie gelernt wurde und danach abgespeichert wurde. Dieses Wissen kann der Person 4 auf Anfrage zur Verfügung gestellt werden. Die Anfrage als solche kann in Textform vorliegen. Sie sollte jedoch durch weitere, von der Künstlichen Intelligenz 9 entgegengenommenen Daten M, I ergänzt werden. Alternativ kann die Künstliche Intelligenz 9 die Auswertungsergebnisse A dem Automatisierungssystem 1 in Form von Steuerbefehlen S" vorgeben. Es ist möglich, dass die Vorgabe der Steuerbefehle S" direkt erfolgt. Alternativ kann die Vorgabe der Steuerbefehle S" über die Mensch-Maschine-Schnittstelle 3 erfolgen. Im letztgenannten Fall ist es insbesondere möglich, dass die Steuerbefehle S" zunächst der Person 4 angeboten werden und dann und erst dann gültig geschaltet bzw. dem Automatisierungssystem 1 zugeführt werden, wenn die Person 4 die Steuerbefehle S" durch einen Bestätigungsbefehl C freischaltet.

Es ist möglich, dass die Künstliche Intelligenz 9 die Auswertungsergebnisse A nur auf konkrete Anfrage durch die Person 4 ausgibt. Alternativ ist es möglich, dass die Künstliche Intelligenz 9 zwar im Regelfall keine Auswertungsergebnisse A ausgibt, jedoch laufend und automatisch überprüft, ob sie anhand der ihr zugeführten Daten einen suboptimalen oder sogar kritischen Anlagenzustand erkennt oder prognostiziert. In diesem Fall kann die Künstliche Intelligenz 9 im Falle der Erkennung eines derartigen Anlagenzustands die Auswertungsergebnisse A zusammen mit einer Alarm- oder Hinweismeldung an die Person 4 ausgeben. Die Auswertungsergebnisse A können beispielsweise auch einen Vorschlag mit umfassen, wie dem erkannten suboptimalen oder sogar kritischen Anlagenzustand entgegengewirkt werden kann.

Die Künstliche Intelligenz 9 kann somit - je nach ihrer Auslegung und Einbindung - einen "künstlichen Steuermann" implementieren. Der "künstliche Steuermann" kann direkt oder indirekt über die Mensch-Maschine-Schnittstelle 3 auf das Automatisierungssystem 1 wirken. Auch kann die Künstliche Intelligenz 9 als "digitaler Assistent" des (menschlichen) Steuermanns wirken, der den Steuermann auf suboptimale/kritische Anlagenzustände hinweist und/oder dem Steuermann Vorschläge für Steuerbefehle S" macht, die der Steuermann nur noch umsetzen oder eventuell sogar nur noch bestätigen muss. Auch kann die Künstliche Intelligenz 9 als "digitaler Experte" des (menschlichen) Steuermanns wirken, der dem Steuermann auf Anfrage sein Wissen zur Verfügung stellt.

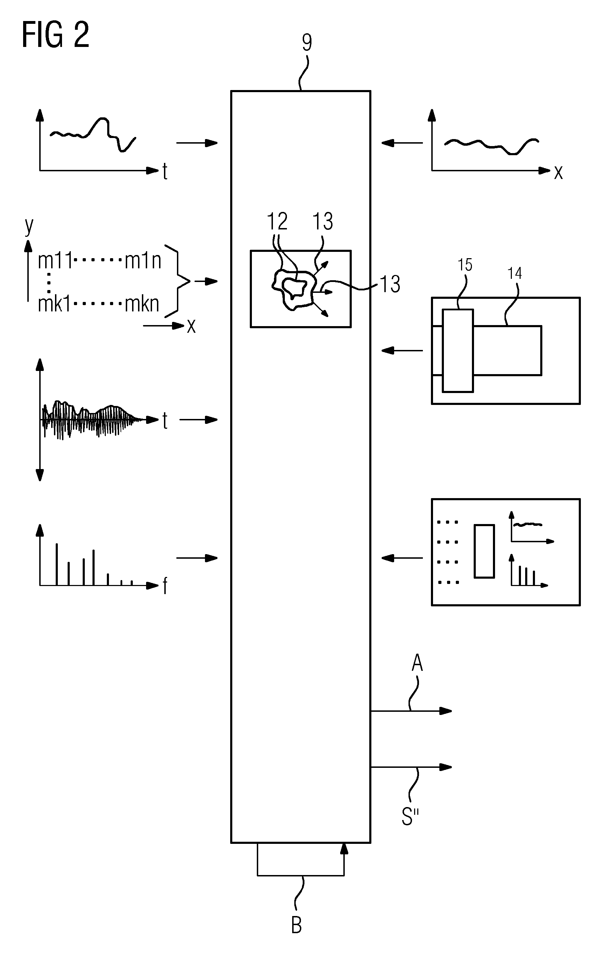

Die von der Künstlichen Intelligenz 9 entgegengenommenen Daten M, I sind zumindest teilweise dimensionale Daten. Dies wird nachfolgend in Verbindung mit FIG 2 anhand mehrerer Beispiele näher erläutert.

Wie in FIG 2 links ganz oben dargestellt ist, können die dimensionalen Daten beispielsweise einen zeitlichen Verlauf eines Messwerts oder eines internen Wertes umfassen. In diesem Fall sind die entsprechenden Daten eindimensional und die Dimension ist die Zeit. Ein Beispiel ist ein Temperaturverlauf. Der Temperaturverlauf kann gemessen oder rechnerisch ermittelt sein. Es ist möglich, der Künstlichen Intelligenz 9 den entsprechenden zeitlichen Verlauf als reine Sequenz von Werten vorzugeben. In diesem Fall muss der Künstlichen Intelligenz 9 die Zeitbasis bekannt sein. Es ist weiterhin möglich, der Künstlichen Intelligenz 9 den entsprechenden zeitlichen Verlauf als Sequenz von Wertepaaren vorzugeben, wobei pro Wertepaar einer der beiden Werte der jeweilige Zeitpunkt und der andere Wert der jeweilige Messwert M ist. Es ist sogar möglich, den entsprechenden zeitlichen Verlauf der Künstlichen Intelligenz 9 als Bild vorzugeben, anhand dessen von der künstlichen Intelligenz 9 der zeitliche Verlauf ermittelt wird. Dies wird aus den nachfolgenden Ausführungen noch ersichtlich werden.

Wie in FIG 2 unmittelbar darunter dargestellt ist, können die dimensionalen Daten sich auch in mindestens zwei Dimensionen erstrecken. Rein beispielhaft ist dies in der Darstellung für ein Datenfeld gezeigt, das sich in zwei örtlichen Dimensionen erstreckt. Ein Beispiel eines derartigen Datenfeldes ist die Oberflächentemperatur eines Metallbandes ortsaufgelöst in Bandbreitenrichtung und Bandlängenrichtung.

Im Falle eines derartigen Datenfeldes, das sich in mindestens zwei Dimensionen erstreckt, kann die Künstliche Intelligenz 9 im Rahmen der Ermittlung der Auswertungsergebnisse A für derartige Daten insbesondere Kurven gleichen Wertes 12 (im Falle eines Temperaturfeldes also Isothermen) oder Gradienten 13 ermitteln. Es ist, wie aus der Darstellung in FIG 2 innerhalb der Künstlichen Intelligenz 9 ersichtlich ist, auch möglich, sowohl die Kurven gleichen Wertes 12 als auch die Gradienten 13 zu ermitteln.

Wie in FIG 2 darunter dargestellt ist, können die dimensionalen Daten einer akustischen Schwingung (also den zeitlichen Verlauf des Schallpegels oder dergleichen) umfassen. Alternativ zum zeitlichen Verlauf können die dimensionalen Daten, wie in FIG 2 darunter dargestellt ist, ein Spektrum einer derartigen akustischen Schwingung umfassen.

Wie in FIG 2 rechts ganz oben dargestellt ist, können die dimensionalen Daten auch einen örtlichen Verlauf eines Messwerts oder eines internen Wertes umfassen. In diesem Fall sind die entsprechenden Daten eindimensional, wobei jedoch die Dimension der Ort ist. Ein Beispiel ist ein Konturverlauf eines Walzspaltes. Der Konturverlauf wird in der Regel rechnerisch ermittelt sein.

Wie in FIG 2 rechts unmittelbar darunter dargestellt ist, können die dimensionalen Daten beispielsweise ein von einer Sensoreinrichtung 2 erfasstes Bild (oder einen Teil eines derartigen Bildes) umfassen. Wie aus der mehrfachen Darstellung des Bildes erkennbar ist, können die dimensionalen Daten auch eine zeitliche Sequenz eines derartigen Bildes oder eines derartigen Teils eines Bildes umfassen. Ein Beispiel eines derartigen Bildes ist ein Bild, das ein Metallband zwischen zwei Walzgerüsten einer mehrgerüstigen Walzstraße zeigt. Hier ist insbesondere ein Infrarot-Bild von Vorteil. Es kann sich aber auch um ein Bild im sichtbaren Spektrum handeln.

Wie in FIG 2 rechts darunter dargestellt ist, können die dimensionalen Daten beispielsweise ein über die Mensch-Maschine-Schnittstelle 3 an die Person 4 ausgegebenes Bild (oder einen Teil eines derartigen Bildes) umfassen. Auch hier ist wieder die Auswertung einer Sequenz eines derartigen Bildes oder eines derartigen Teils eines Bildes möglich.

Weiterhin können der Künstlichen Intelligenz 9 auch weitere Daten zugeführt werden, beispielsweise Daten einer chemischen Analyse. Die chemische Analyse kann beispielsweise auf Einsatzstoffe (welche chemische Zusammensetzung weist beispielsweise der einem Konverter zugeführte Stahl auf?), Produktionsergebnisse (welche chemische Zusammensetzung weist beispielsweise der Stahl nach einem Pfannenprozess auf?) oder Nebenprodukte (welche chemische Zusammensetzung weist beispielsweise ein entstehendes Abgas auf?) sein.

Auch die Auswertung anderer dimensionaler Daten ist möglich. Weiterhin können die dimensionalen Daten nicht nur Messdaten M umfassen, sondern auch Daten, die vom Automatisierungssystem 1 anhand eines Modells errechnet werden. Ein Beispiel derartiger Daten ist ein Temperaturverlauf über die Dicke im Inneren eines Metallbandes.

Es ist denkbar, dass der Künstlichen Intelligenz 9 ausschließlich derartige dimensionale Daten zugeführt werden. In der Regel werden der Künstlichen Intelligenz 9 jedoch zusätzlich auch andere, nicht dimensionale Daten zugeführt. In diesem Fall werden von der Künstlichen Intelligenz 9 selbstverständlich auch diese Daten mit ausgewertet. Die nachfolgenden Ausführungen beziehen sich jedoch stets auf Sachverhalte, welche entweder ausschließlich die dimensionalen Daten betreffen oder aber zusätzlich zu nicht dimensionalen Daten auch die dimensionalen Daten betreffen.

Die Künstliche Intelligenz 9 ist vorzugsweise fähig, ein Maschinenlernen auszuführen. Die künstliche Intelligenz 9 ist somit vorzugsweise eine (entsprechend programmierte) Recheneinrichtung 6, der lediglich hinreichend oft ein jeweiliger Sachverhalt und eine Bewertung B des jeweiligen Sachverhalts vorgegeben werden müssen und die aus der Vielzahl von vorgegebenen Sachverhalten nebst zugehöriger Bewertung B eigenständig Regeln ermitteln kann, wie eine möglichst gute Bewertung erzielt werden kann. Maschinenlernen ist also eine Methode, um aus Beispieldaten zu lernen. Diese Vorgehensweise wird in Fachkreisen oftmals auch als "programming by inputoutput examples rather than by coding" bezeichnet. Derartige Künstliche Intelligenzen 9 sind Fachleuten allgemein bekannt.

Sobald eine derartige Künstliche Intelligenz 9 ihr Expertenwissen gelernt hat, kann sie auch ständig weiter lernen. Hierfür ist es lediglich erforderlich, dass die Künstliche Intelligenz 9 parallel zur Ermittlung der Auswertungsergebnisse A auch die entsprechende Bewertung B der Auswertungsergebnisse A ermittelt. Dadurch kann die Künstliche Intelligenz 9 sich selbst anhand der von ihr ermittelten Bewertung B nachtrainieren. Prinzipiell kann die Künstliche Intelligenz 9 jedoch auch andersartig ausgebildet sein.

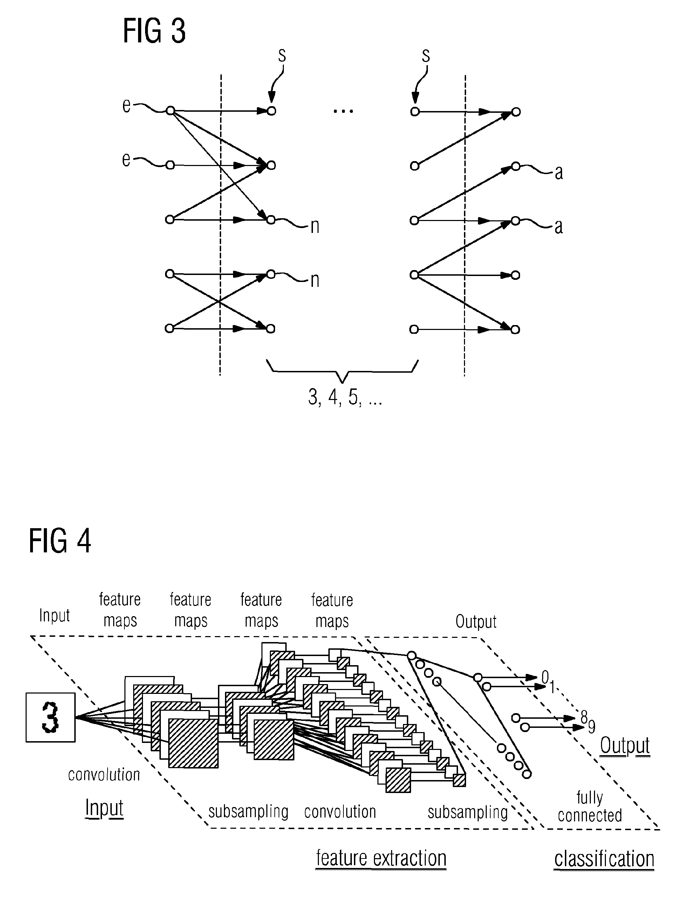

Für die Implementierung der Künstlichen Intelligenz 9 sind verschiedene Möglichkeiten gegeben. Derzeit ist entsprechend der Darstellung in den FIG 3 und 4 bevorzugt, die Künstliche Intelligenz 9 als künstliches neuronales Netz auszubilden. Bei dem künstlichen neuronalen Netz kann es sich insbesondere entsprechend der Darstellung in FIG 3 um ein tiefes neuronales Netz oder entsprechend der Darstellung in FIG 4 sogar um ein faltendes neuronales Netz handeln.

Ein neuronales Netz weist entsprechend der Darstellung in den FIG 3 und 4 eine Anzahl von Eingangsneuronen e und eine Anzahl von Ausgangsneuronen a auf. Zwischen den Eingangsneuronen e und den Ausgangsneuronen a befindet sich mindestens eine Schicht s von verborgenen Neuronen n. Die Neuronen e, n, a sind in an sich bekannter Weise miteinander verknüpft. Von den Neuronen e, n, a sind in den FIG 3 und 4 nur einige mit ihren Bezugszeichen versehen. Ein tiefes neuronales Netz ist entsprechend der Darstellung in FIG 3 ein neuronales Netz, das eine Vielzahl an Schichten s (Layern) von verborgenen Neuronen n aufweist. Die Anzahl an Schichten s mit verborgenen Neuronen n beträgt mindestens drei. Sie kann auch größer sein, beispielsweise bei 5, 8 oder 10 liegen. In der Regel sind 15 Schichten s völlig ausreichend. Die Anzahl an Schichten s mit verborgenen Neuronen n liegt daher vorzugsweise zwischen diesen beiden Grenzen, also zwischen 3 und 15. Es kann im Einzelfall jedoch auch ein neuronales Netz mit mehr als 15 Schichten s von verborgenen Neuronen n verwendet werden. Ein faltendes neuronales Netz ist entsprechend der Darstellung in FIG 4 ein tiefes neuronales Netz, das eine Eingangsschicht (Input), mehrere sich abwechselnde Convolutional und Subsampling Schichten (Versteckte Schichten) und eine Ausgangschicht (Output bzw. Classification) aufweist. Die Convolutional und Subsampling Schichten stellen die eigentliche Intelligenz im engeren Sinne dar, welche aus der über die Eingangsschicht zur Verfügung gestellten Informationen die relevanten Sachverhalte extrahiert. Die Ausgangsschicht liefert das Ergebnis der Analyse. Bei geeigneter Anpassung des faltenden neuronalen Netzes an die jeweilige Anwendung kann die Komplexität des neuronalen Netzes gegenüber einem tiefen neuronalen Netz deutlich verringert werden, ohne die auf die jeweilige Anwendung bezogene Leistungsfähigkeit des neuronalen Netzes zu verringern. Die konkrete Darstellung in FIG 4 dient dazu, anhand eines Bildes zu erkennen, welche Ziffer in dem Bild dargestellt ist. Das Prinzip von FIG 4 ist bei entsprechender Ausgestaltung des faltenden neuronalen Netzes jedoch auch auf andere Sachverhalte anwendbar.

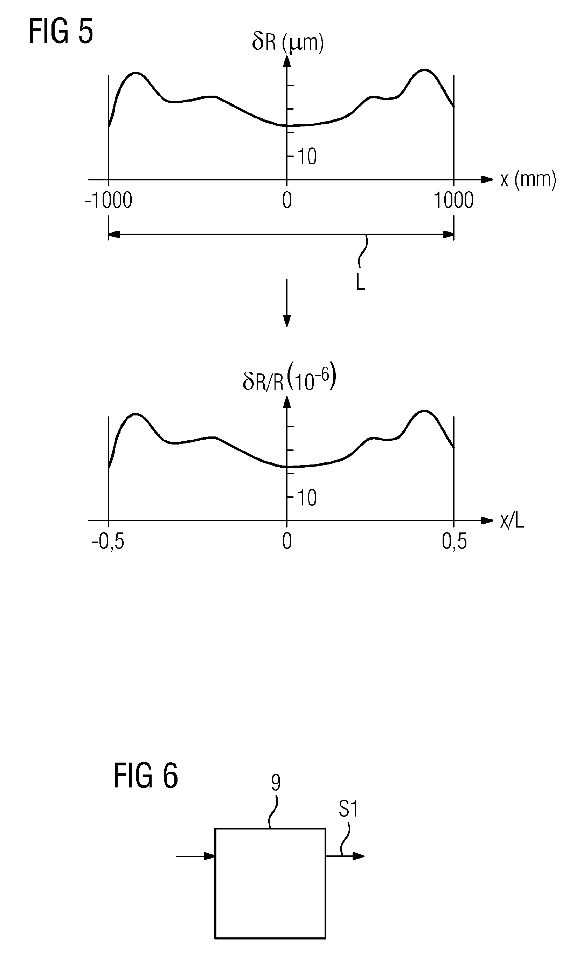

Es ist möglich, dass die Künstliche Intelligenz 9 einheitenbehaftete Größen entgegennimmt und auswertet. Einheitenbehaftete Größen sind Größen, denen eine physikalische Einheit zugeordnet ist, beispielsweise eine die Einheit Meter, die Einheit Meter pro Sekunde, Newton, Newton/mm² und andere mehr. Vorzugsweise sind die von der Künstlichen Intelligenz 9 entgegengenommenen Daten und/oder deren Bezug in der Dimension jedoch einheitslos oder werden von der Künstlichen Intelligenz 9 in derartige Daten umgewandelt. Dieser Vorgang wird anhand von FIG 5 näher erläutert.

FIG 5 zeigt als Beispiel für eine dimensionale Größe eine örtlich eindimensionale Größe, nämlich einen Konturverlauf einer Arbeitswalze eines Walzgerüsts über die Ballenlänge. Als Ballenlänge L ist - prinzipiell willkürlich - angenommen, dass diese exakt 2,00 m beträgt. Nach rechts ist im oberen Teil von FIG 5 der Ort auf dem Walzenballen aufgetragen, nach oben die Balligkeit, d.h. die Abweichung δR von einem Grundradius R. Diese Art der Darstellung ist nicht einheitslos.

Denn sowohl der Ort auf dem Walzenballen als solcher als auch die Balligkeit weisen die Einheit Meter (m) auf. Es ist jedoch auf einfache Weise möglich, sowohl den Ort auf dem Walzenballen als solcher als auch die Balligkeit δR in einheitslose Größen umzurechnen. Insbesondere müssen hierfür lediglich, wie in FIG 5 in der unteren Darstellung gezeigt, die Balligkeit δR auf den Grundradius R und der Ort auf dem Walzenballen auf die Ballenlänge L bezogen werden.

Ähnliche Vorgehensweisen sind für nahezu beliebige andere Größen möglich.

Nachfolgend werden in Verbindung mit den FIG 6 bis 10 mehrere Möglichkeiten zur Implementierung der vorliegenden Erfindung anhand konkreter Beispiele erläutert. Die Beispiele sind jedoch nicht in dem Sinne zu verstehen, dass die vorliegende Erfindung nur bei diesen Anwendungsfällen einsetzbar ist.

Gemäß FIG 6 umfassen die von der Künstlichen Intelligenz 9 entgegengenommenen Daten unter anderem
- ein Profil eines flachen Walzguts vor einer Ausführung einer Mehrzahl von Walzstichen, mit denen ein flaches Walzgut nacheinander gewalzt wird,
- für die Mehrzahl an Walzstichen die jeweiligen Stichplandaten und die jeweilige Kontur des Walzspaltes und/oder der Walzenballen der Arbeitswalzen des den jeweiligen Walzstich ausführenden Walzgerüsts sowie
- Profil und/oder Planheit des flachen Walzguts nach der Ausführung der Mehrzahl von Walzstichen.

Das Walzgut kann alternativ ein Grobblech oder ein Band sein. Die Anzahl an Walzstichen liegt in der Regel zwischen 3 und 20, beispielsweise zwischen 4 und 7, insbesondere bei 5, 6 oder 7. In der Regel werden die Stiche in einer mehrgerüstigen Fertigstraße ausgeführt. In diesem Fall - dem Regelfall - wird jeder Walzstich von einem eigenen Walzgerüst ausgeführt. Es ist jedoch alternativ auch möglich, die Walzstiche reversierend auszuführen. In diesem Fall führt das Reversiergerüst (oder in Einzelfällen ein Paar von Reversiergerüsten) die Stiche aus. In diesem Fall werden also von einem Walzgerüst mehrere Walzstiche ausgeführt

Für jeden Stich werden der Künstlichen Intelligenz 9 die Kontur des Walzspaltes und/oder der Walzenballen der Arbeitswalzen des den jeweiligen Walzstich ausführenden Walzgerüsts ortsaufgelöst über die Walzgutbreite vorgegeben. Die Ortsauflösung ist derart, dass über die Walzgutbreite gesehen der Walzspalt bzw. der jeweilige Radius (oder Durchmesser) der beiden Arbeitswalzen über die Walzgutbreite für mindestens 5 Stellen vorgegeben wird. Vorzugsweise erfolgt eine Vorgabe für mindestens 10 Stellen. Im einfachsten Fall ist die Vorgabe statisch. Sie kann jedoch als Funktion der Zeit definiert sein. Im letztgenannten Fall ist es insbesondere möglich, die jeweilige Kontur bzw. die jeweiligen Walzenballen über eine Wegverfolgung des Walzguts bestimmten Stellen des fertig gewalzten Walzguts zuzuordnen.

Für jeden Stich werden der Künstlichen Intelligenz 9 weiterhin die Stichplandaten zugeführt. Die Stichplandaten umfassen insbesondere den jeweiligen Sollwalzspalt, die jeweilige Walzkraft, eventuell die jeweilige Rückbiegekraft, eventuell eine jeweilige Keilanstellung und eine jeweilige Arbeitswalzenverschiebung. Weiterhin umfassen die Stichplandaten die statischen und dynamischen Daten des Walzguts. Die statischen Daten des Walzguts umfassen zumindest dessen chemische Zusammensetzung, eventuell auch dessen Breite. Die dynamischen Daten umfassen (in bis zu 3 Dimensionen ortsaufgelöst und/oder zeitlich aufgelöst) die Temperatur des Walzguts während der Ausführung des jeweiligen Walzstichs sowie die Dicke des Walzguts vor und nach dem jeweiligen Walzstich und eventuell zusätzlich die Breite des Walzguts vor und nach dem jeweiligen Walzstich.

Weiterhin wird der Künstlichen Intelligenz 9 das anfängliche Profil des Walzguts - also vor der Ausführung der Walzstiche - vorgegeben. Das anfängliche Profil ist zumindest über die Breite ortsaufgelöst. Es kann zusätzlich auch über die Länge des Walzguts ortsaufgelöst sein. Die Auflösung über die Breite des Walzguts ist derart, dass über die Walzgutbreite gesehen die jeweilige Dicke des Walzguts für mindestens 5 Stellen vorgegeben wird. Vorzugsweise erfolgt eine Vorgabe für mindestens 10 Stellen. Über die Länge des Walzguts gesehen erfolgt entweder keine Ortsauflösung oder zumindest eine Ortsauflösung für den Kopf, das Mittelstück und den Fuß des Walzguts. Es ist insbesondere im Falle eines Bandes weiterhin möglich, eine Ortsauflösung über die Länge des Walzguts gesehen über viele (oftmals über 100) Abschnitte vorzunehmen. Die einzelnen Abschnitte können in diesem Fall beispielsweise durch eine einheitliche Länge, eine einheitliche Masse oder einen Arbeitstakt bestimmt sein.

Weiterhin werden der Künstlichen Intelligenz 9 die Planheit und/oder das Profil des fertig gewalzten Walzguts (also nach der Ausführung der Walzstiche) ortsaufgelöst zumindest über die Breite des Walzguts, vorzugsweise auch über die Länge des Walzguts, vorgegeben. Bezüglich der Genauigkeit der Ortsauflösung in Länge und Breite sind die obigen Aussagen zum anfänglichen Profil des Walzguts analog gültig.

Die von der Künstlichen Intelligenz 9 ermittelten Auswertungsergebnisse A können in diesem Fall beispielsweise eine Strategie S1 zum Verschieben der Arbeitswalzen und/oder von Zwischenwalzen der die jeweiligen Walzstiche ausführenden Walzgerüste für einen nachfolgenden Walzvorgang eines weiteren flachen Walzguts umfassen. Die ermittelten Verschiebungen können dann für den nächsten Walzvorgang - eventuell für den nächsten gleichartigen Walzvorgang - angewendet werden. Im einfachsten Fall erfolgt die Ermittlung der Verschiebung separat für jeden Walzstich. Es ist jedoch ebenso möglich, die Verschiebungen walzstichübergreifend zu ermitteln. Es kann weiterhin im Einzelfall ausreichen, die Walzenverschiebung nur für einen Teil der Walzgerüste bzw. Walzstiche zu ermitteln.

Durch diese Vorgehensweise können insbesondere Konturverläufe und Planheitsverläufe gewalzter Metallbänder optimiert werden. Unter Umständen können zusätzlich Walzenwechselintervalle maximiert werden. Die Vorgehensweise von FIG 6 kann insbesondere beim Warmwalzen von Stahl oder Aluminium angewendet werden.

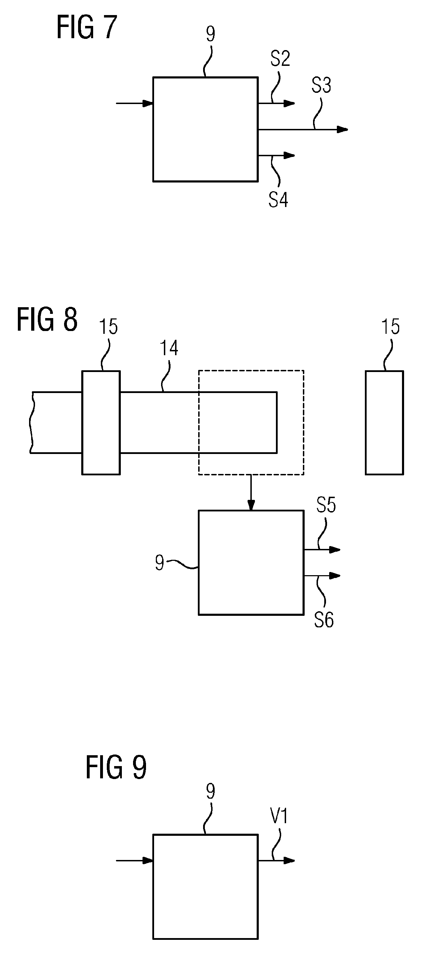

Gemäß FIG 7 umfassen die von der Künstlichen Intelligenz 9 entgegengenommenen Daten für eine Mehrzahl von Walzgerüsten, mittels derer ein flaches Walzgut nacheinander gewalzt wird, die jeweiligen Stichplandaten.

Das Walzgut ist in der Regel ein Band. Das Walzen des Bandes erfolgt in der Regel in einer Tandemstraße, in der das Band kaltgewalzt wird. Die Anzahl an Walzstichen liegt in der Regel zwischen 3 und 8, beispielsweise zwischen 4 und 7, insbesondere bei 5 oder 6. Die Stichplandaten umfassen insbesondere für jeden Walzstich den jeweiligen Sollwalzspalt, die jeweilige Walzkraft, eventuell eine jeweilige Rückbiegekraft, eventuell eine Keilanstellung und eventuell eine Arbeitswalzenverschiebung. Sie umfassen weiterhin für jeden Walzstich statische und dynamische Daten des Walzguts. Die statischen Daten des Walzguts umfassen können beispielsweise dessen chemische Zusammensetzung und eventuell auch dessen Breite umfassen. Die dynamischen Daten umfassen insbesondere die Dicke des Walzguts vor und nach dem jeweiligen Walzstich und eventuell zusätzlich die Breite des Walzguts vor und nach dem jeweiligen Walzstich.

Für jeden Stich werden der Künstlichen Intelligenz 9 die Kontur des Walzspaltes und/oder der Walzenballen der Arbeitswalzen des den jeweiligen Walzstich ausführenden Walzgerüsts ortsaufgelöst über die Walzgutbreite vorgegeben. Die Ortsauflösung ist derart, dass über die Walzgutbreite gesehen der Walzspalt bzw. der jeweilige Radius (oder Durchmesser) der beiden Arbeitswalzen über die Walzgutbreite für mindestens 5 Stellen vorgegeben wird. Vorzugsweise erfolgt eine Vorgabe für mindestens 10 Stellen.

Weiterhin werden der Künstlichen Intelligenz 9 das Profil und/oder die Planheit des flachen Walzguts nach dem Durchlaufen der Walzgerüste zugeführt.

Anhand dieser Größen ermittelt die Künstliche Intelligenz 9 im laufenden Betrieb - also während des Walzens des Walzguts - eine Ansteuerung für eine segmentierte Arbeitswalzenkühlung mindestens eines der Walzgerüste, eine einzustellende Verschiebung der Arbeitswalzen mindestens eines der Walzgerüste und/oder eine einzustellende Rückbiegung der Arbeitswalzen mindestens eines der Walzgerüste. Die Künstliche Intelligenz 9 implementiert somit eine Strategie S2 zum segmentierten Kühlen von Walzen mindestens eines der Walzgerüste und/oder eine Strategie S3 für eine Arbeitswalzenverschiebung und/oder eine Strategie S4 für eine Arbeitswalzenrückbiegung. Die Strategien S2, S3 und/oder S4 stellen somit einen intelligenten Regler dar.

Durch diese Vorgehensweise können insbesondere Konturverläufe und Planheitsverläufe kaltgewalzter Metallbänder optimiert werden. Die Vorgehensweise ist aber auch beim Warmwalzen von Bändern anwendbar, insbesondere beim Warmwalzen von Aluminiumsbändern.

Gemäß FIG 8 umfassen die von der Künstlichen Intelligenz 9 entgegengenommenen Daten unter anderem mindestens ein Bild. Das Bild zeigt den Bereich zwischen zwei aufeinanderfolgenden Walzgerüsten 15 einer mehrgerüstigen Walzstraße. Das Bild (sichtbares Spektrum oder - bevorzugt - Infrarot) muss die Walzgerüste 15 nicht notwendigerweise enthalten. Es muss lediglich aus dem Bild die laterale Position des Metallbandes 14 ermittelbar sein. Weiterhin wird der Künstlichen Intelligenz 9 eine Differenzstellgröße des stromaufwärts gelegenen der beiden Walzgerüste 15 zugeführt. Die Differenzstellgröße kann beispielsweise eine Differenzwalzkraft oder ein Differenzwalzspalt sein.

Es ist möglich, dass das Bild den Bandkopf des Metallbandes 14 zeigt, während also das Metallband 14 zwar bereits aus dem stromaufwärts gelegenen der beiden Walzgerüste 15 ausgelaufen ist, das stromabwärts gelegene der beiden Walzgerüste 15 aber noch nicht erreicht hat. In diesem Fall können die von der Künstlichen Intelligenz 9 ermittelten Auswertungsergebnisse A eine Strategie S5 zum Steuern des Bandlaufs beim Einfädeln des Metallbandes 14 umfassen. Insbesondere kann die Strategie S5 derart bestimmt sein, dass das Metallband 14 in das stromabwärts gelegene Walzgerüst 15 mittig und möglichst ohne Querkomponente der Geschwindigkeit einläuft. Durch diese Vorgehensweise können insbesondere Hochgeher besser vermieden werden.

Es ist ebenso möglich, dass das Bild das Metallband 14 zeigt, während das Metallband 14 zwischen den beiden Walzgerüsten 15 eingespannt ist. In diesem Fall können die von der Künstlichen Intelligenz 9 ermittelten Auswertungsergebnisse A eine Strategie S6 zum Steuern des Bandlaufs (meandering) beim "normalen" Walzen des Metallbandes 14 umfassen. Im Rahmen dieser Strategie wird der Künstlichen Intelligenz 9, sofern möglich, weiterhin ein Differenzzug zugeführt, der im Metallband 14 zwischen den beiden Walzgerüsten 15 herrscht. Der Differenzzug kann beispielsweise mittels eines Schlingenhebers erfasst werden, der zwischen den beiden Walzgerüsten 15 angeordnet ist. Durch diese Vorgehensweise kann insbesondere ein möglichst mittiger Bandlauf erreicht werden.

Wenn das Metallband 14 zwischen den beiden Walzgerüsten eingespannt ist, kann die entsprechende Vorgehensweise auch parallel für mehrere derartige Walzgerüste gleichzeitig ausgeführt werden. In diesem Fall werden der Künstlichen Intelligenz 9 für jedes Walzgerüst, bei dem die entsprechende Vorgehensweise ausgeführt wird, die entsprechenden Daten (Bild, Differenzstellgröße und eventuell Differenzzug) zugeführt. In diesem Fall kann die Künstliche Intelligenz 9 insbesondere eine walzgerüstübergreifende Ermittlung der Differenzstellgröße vornehmen.

In beiden Fällen - sowohl für die Ermittlung der Strategie S5 als auch für die Ermittlung der Strategie S6 - können der Künstlichen Intelligenz 9 weitere Stichplandaten zugeführt werden. In beiden Fällen ermittelt die Künstliche Intelligenz 9 die Differenzwalzkraft oder die Differenzanstellung - allgemein die Differenzstellgröße - des stromaufwärts gelegenen Walzgerüsts 15. Ziel der Ermittlung ist es, ein Optimum der Bandzentrierung und der Planheit zu erreichen.

Gemäß FIG 9 umfassen die von der Künstlichen Intelligenz 9 entgegengenommenen Daten unter anderem dimensionale Daten, die einen Verschleiß eines Bauelements der Anlage ANL der Grundstoffindustrie beschreiben. Die von der Künstlichen Intelligenz 9 ermittelten Auswertungsergebnisse A können in diesem Fall eine Vorhersage V1 einer Restlaufzeit des Bauelements der Anlage ANL der Grundstoffindustrie umfassen.

Beispielsweise kann das Bauelement eine Arbeitswalze eines Walzgerüsts sein. In diesem Fall umfassen die von der Künstlichen Intelligenz 9 entgegengenommenen Daten eine Walzenballenkontur als Funktion der Walzenreise der Arbeitswalze sowie die Stichplandaten des Walzgerüsts. Der Begriff "Walzenreise" hat für den Fachmann eine feste Bedeutung. Es ist die seit dem Einbau der Walze in das Walzgerüst auf dem Walzgut (oder einem anderen Walzgut) insgesamt zurückgelegte Wegstrecke. Die Walzenballenkontur ist, wie bereits obenstehend in Verbindung mit den FIG 6 und 7 erläutert, ortsaufgelöst über die Länge des Walzenballens. Die Walzenballenkontur ist vorzugsweise aufgeschlüsselt in eine Grundkontur, ergänzt um eine Konturänderung durch Rückbiegung sowie eine Konturänderung durch Temperatureffekte und Verschleiß. Stichplandaten sind ebenfalls bereits erläutert. Anhand der ihr zugeführten Daten kann von der künstlichen Intelligenz 9 vorhergesagt werden, wann die jeweilige Arbeitswalze (bzw. der entsprechende Walzensatz) gewechselt werden muss. Diese Vorhersage kann beispielsweise zur Anpassung und Optimierung der Produktionsplanung verwendet werden, insbesondere beim Endloswalzen und beim Semi-Endloswalzen.

Es ist möglich, die Vorgehensweise von FIG 9 separat für jedes Walzgerüst 15 durchzuführen. Alternativ ist es möglich, sie gerüstübergreifend durchzuführen.

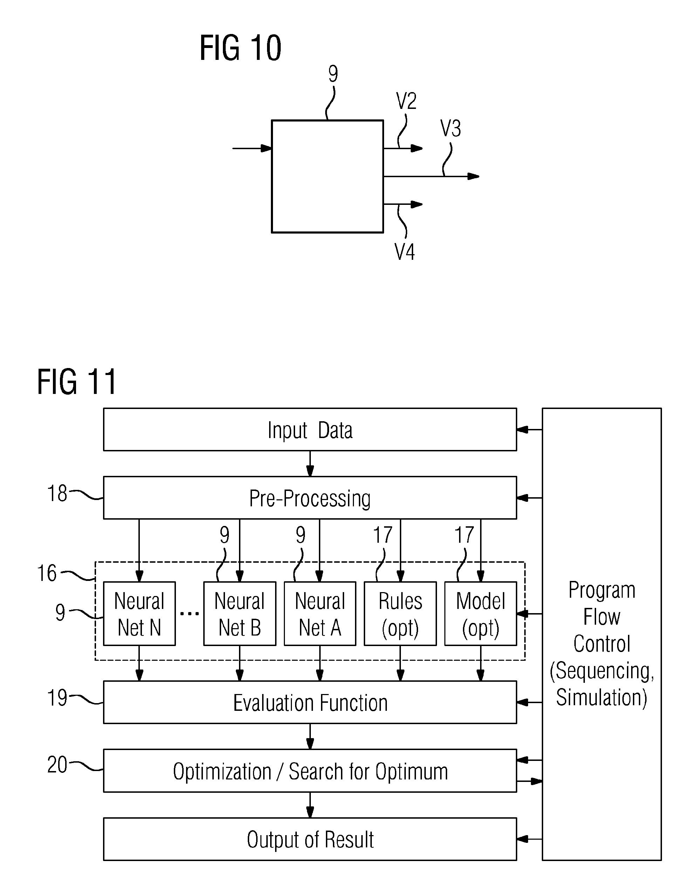

Gemäß FIG 10 umfassen die von der Künstlichen Intelligenz 9 entgegengenommenen Daten mindestens eine der nachfolgend genannten dimensionalen Daten:
- Mindestens einen Massenstrom und/oder mindestens einen Volumenstrom eines einem Konvertergefäß zugeführten Stoffes als Funktion der Zeit. Bei dem Stoff kann es sich beispielsweise um ein Gas (Sauerstoff, Luft, Stickstoff, Argon, ...) oder um einen Feststoff wie beispielsweise Kalk, Erz oder andere handeln. Für Feststoffe kann es ausreichen, anstelle eines kontinuierlichen zeitlichen Verlauf jeweils nur einzelne Zeitpunkte und die jeweils zugeführte Menge an Feststoff anzugeben.
- Eine Position einer im Konvertergefäß befindlichen Lanze als Funktion der Zeit. Die Position kann den Ort als solchen und/oder die Orientierung der Lanze umfassen.
- Eine Kühlwassertemperatur des Konverters als Funktion der Zeit.
- Eine Menge und/oder eine Zusammensetzung eines aus dem Konvertergefäß austretenden Abgases als Funktion der Zeit. Über die Menge und die Zusammensetzung des Abgases können insbesondere Rückschlüsse auf den Fortschritt des im Konvertergefäß ablaufenden Prozesses gezogen werden.
- Mindestens eine aus dem Bereich des Konvertergefäßes stammende akustische Schwingung und/oder deren Spektrum. Die akustische Schwingung kann beispielsweise mittels eines üblichen Mikrofons (Ton, Geräusch) oder als Körperschall (akustische Körperschwingung) erfasst werden.
- Mindestens ein den Bereich eines Konverterhutes enthaltenes Bild (sichtbares Spektrum oder - bevorzugt - Infrarot), oftmals sogar eine zeitliche Sequenz derartiger Bilder. Das Bild des Konverterhutes kann beispielsweise das Flammenbild des Konverters mit enthalten. Aus dem Flammenbild können - ähnlich wie aus Menge und Zusammensetzung des Abgases - Rückschlüsse auf den Fortschritt des im Konvertergefäß ablaufenden Prozesses gezogen werden.
- Dimensionale Modelldaten aus einem physikalisch-chemischen Modell eines im Konvertergefäß befindlichen Metalls und/oder hiermit korrespondierend vorab bestimmte Vergleichsdaten. Bei diesen Daten kann es sich insbesondere um örtlich ortsaufgelöste Daten handeln. Die Ortsauflösung kann insbesondere zwei- oder dreidimensional sein.
- Eine ortsaufgelöste Darstellung eines Konverterfutterzustands.

In der Regel werden der Künstlichen Intelligenz 9 mehrere der oben genannten Daten zugeführt. Es müssen der Künstlichen Intelligenz 9 jedoch nicht alle Daten zugeführt werden. Weiterhin werden der künstlichen Intelligenz 9 oftmals auch weitere, nicht dimensionale Daten zugeführt wie beispielsweise der sogenannte Schrottsatz, die Schrottart, die Schrottmenge und die chemische Analyse des Schrottes, vergleichbare Angaben einschließlich der Temperatur bezüglich des Roheisens, Daten über eine subjektive Einschätzung des erwarteten und/oder bereits erfolgten Auswurfverhaltens durch die Bedienperson 4 oder andere Randbedingungen wie beispielsweise die Luftfeuchtigkeit, die Umgebungstemperatur und andere mehr. Welche Daten der Künstlichen Intelligenz 9 konkret zugeführt werden, kann von Einzelfall zu Einzelfall verschieden sein.

Die von der Künstlichen Intelligenz 9 ermittelten Auswertungsergebnisse A können in diesem Fall eine Vorhersage V2 bis V4 über eine Wahrscheinlichkeit, einen Zeitpunkt und/oder ein Ausmaß eines zu erwartenden Auswurfs aus dem Konvertergefäß umfassen. Alternativ oder zusätzlich ist es möglich, mittels der Künstlichen Intelligenz 9 einen zu erwartenden Endgehalt an Sauerstoff und/oder Kohlenstoff des im Konvertergefäß befindlichen Metalls, eine für einen Abstichzeitpunkt prognostizierte Temperatur des im Konvertergefäß befindlichen Metalls, ein Ergebnis eines im Konvertergefäß erfolgenden Entphosphorungsprozesses und/oder metallurgische Größen während eines Blasvorgangs innerhalb des Konvertergefäßes zu ermitteln.

Zum Ermitteln der Vorhersagen V2 bis V4 kann die Künstliche Intelligenz 9 beispielsweise die ihr zugeführten Größen dahingehend auswerten, dass sie Steuer- und Regelbefehle vorschlägt oder eventuell sogar direkt umsetzt, um beispielsweise Konverterauswurf zu vermeiden. Die Steuer- und Regelbefehle können beispielsweise eine Anpassung der Lanzenposition, eines Volumen- oder Massenstroms an Sauerstoff, Zeitpunkt und Menge der Zugabe von festen Zuschlagstoffen und dergleichen mehr umfassen. So erfolgt beispielsweise die Zugabe von festen Zuschlagstoffen wie Kalk oder Dolomit und dergleichen, die der Entphosphorung dienen, nur im unteren Temperaturbereich des Prozessverlaufs des Konverters (bis maximal ca. 1600 °C). In diesem Fall kann sich für die Künstliche Intelligenz 9 die Aufgabe ergeben, anhand (unter anderem) der dimensionalen Daten den richtigen Zeitpunkt für die Zugabe der richtigen Menge an Zuschlagstoff zu ermitteln und der Bedienperson 4 vorzugeben. Die Ermittlung kann beispielsweise anhand des zeitlichen Verlaufs des gemessenen oder modellgestützt ermittelten Massenstroms an Kohlenstoff im Abgas, des Temperaturverlaufs als Funktion der Zeit (gerechnet oder gemessen) und/oder dem zeitlichen Verlauf mindestens eines Schwingungsspektrums erfolgen. In analoger Weise kann die Künstliche Intelligenz 9 auch andere Größen ermitteln, wie beispielsweise eine Vorgabe für die Lanzenstellung oder die Zufuhr von Sauerstoff. Bekannte Zeitprofile für die Schmelze ähnlicher Randbedingungen können abgleichend zur Erhöhung der Wahrscheinlichkeit der von der Künstlichen Intelligenz 9 ermittelten Aussage genutzt werden.

Darüber hinaus kann die Künstliche Intelligenz 9 dazu genutzt werden, Zielgrößen in Temperatur und chemischer Zusammensetzung der Metallschmelze zum Zeitpunkt des Abstichs reproduzierbarer zu gestalten, Nachblasraten zu vermeiden und dergleichen mehr. Insbesondere kann anhand der dimensionalen Daten und weiterer, nicht dimensionaler Daten ein Zielfenster für die Temperatur und den Kohlenstoffgehalt für den Zeitpunkt des Abstichs besser erreicht werden. Zu diesem Zweck können beispielsweise der zeitliche Verlauf des Massenstroms an Sauerstoff, der zeitliche Verlauf der Position der Lanze in Verbindung mit einer Messung des Sauerstoffgehalts und der Temperaturmessung verwertet werden. Eine Umklassifizierung einer Schmelze (wegen einer nicht erreichten chemischen Zusammensetzung) oder eine Rückführung in den Roheisenmischer oder den Konverter (bei geringerer Abweichung der tatsächlichen chemischen Zusammensetzung von der gewünschten) können vermieden werden.

Auch weitere Anwendungen sind ohne weiteres möglich. Beispiele derartiger Anwendungen sind verschiedenste Anlagen der Grundstoffindustrie, insbesondere der stahl- und metallerzeugenden Industrie wie beispielsweise eine Sinteranlage, eine Direktreduktionsanlage oder ein Hochofen. Auch Anlagen der Sekundärmetallurgie wie beispielsweise Vakuumanlagen (RH oder VD), Pfannenöfen, AOD-Konverter, VOD-Anlagen, Legierungs- und Homogenisierungsstände, eine Stranggießanlage oder ein Walzwerk (Warmwalzwerk, gegebenenfalls einschließlich der Wärmöfen, Kaltwalzwerk, Prozesslinien) kommen in Frage. Beispielsweise bei einem Lichtbogenofen können der Künstlichen Intelligenz 9 eine oder mehrere der nachfolgenden dimensionalen Daten zugeführt werden:
- Mindestens ein Massenstrom und/oder mindestens ein Volumenstrom eines dem Lichtbogenofen zugeführten Stoffes als Funktion der Zeit,
- eine Position der Lichtbogenelektroden als Funktion der Zeit,
- Leistungsprofile oder Transformatorschaltstufen als Funktion der Zeit,
- ein durch den Betrieb des Lichtbogenofens hervorgerufenes Flickersignal als Funktion der Zeit und/oder dessen Spektrum,
- eine Transformatortemperatur als Funktion der Zeit,
- ein Zustand des Versorgungsnetzes als Funktion der Zeit,
- eine Kühlwassertemperatur des Lichtbogenofens als Funktion der Zeit,
- eine Menge und/oder eine Zusammensetzung eines aus dem Lichtbogenofen austretenden Abgases als Funktion der Zeit,
- mindestens eine aus dem Bereich des Lichtbogenofens stammende akustische Schwingung (auch hierbei kann es sich alternativ um Luftschall oder um Körperschall handeln) und/oder dessen Spektrum,
- mindestens ein den Bereich der Oberseite des Lichtbogenofens enthaltenes Bild (sichtbares Spektrum oder - bevorzugt - Infrarot, beispielsweise zur Auswertung eines Flammenbildes, insbesondere als Funktion der Zeit),
- dimensionale Modelldaten aus einem physikalisch-chemischen Modell eines im Konvertergefäß befindlichen Metalls und/ oder hiermit korrespondierend vorab bestimmte Vergleichsdaten und/oder
- eine ortsaufgelöste Darstellung eines Futterzustands des Lichtbogenofens.

In der Regel werden der Künstlichen Intelligenz 9 mehrere der oben genannten Daten zugeführt. Es müssen der Künstlichen Intelligenz 9 jedoch nicht alle Daten zugeführt werden. Weiterhin werden der künstlichen Intelligenz 9 oftmals auch weitere, nicht dimensionale Daten zugeführt wie beispielsweise der sogenannte Schrottsatz, die Schrottart, die Schrottmenge und die chemische Analyse des Schrottes, vergleichbare Angaben einschließlich der Temperatur bezüglich des Roheisens, Daten über eine subjektive Einschätzung des erwarteten und/oder bereits erfolgten Schäumverhaltens der im Lichtbogenofen befindlichen Schlacke durch die Bedienperson 4 oder andere Randbedingungen wie beispielsweise die Luftfeuchtigkeit, die Umgebungstemperatur und andere mehr. Welche Daten der Künstlichen Intelligenz 9 konkret zugeführt werden, kann von Einzelfall zu Einzelfall verschieden sein.

Bei einem Lichtbogenofen ist es beispielsweise möglich, dass die Künstliche Intelligenz 9 Steuer- und Regelbefehle vorschlägt oder eventuell sogar direkt umsetzt, um beispielsweise einen minimalen Elektrodenabbrand, einen minimalen Energieverbrauch, eine möglichst geringe Netzrückwirkung, eine Vermeidung gefährlicher Zustände (beispielsweise Wassereintritt in den Lichtbogenofen) und dergleichen mehr zu erreichen. Die Steuer- und Regelbefehle können beispielsweise eine Anpassung der Elektrodenposition, einer Schaltstufe des Ofentransformators, einer Betriebsspannung oder eines Betriebsstroms und dergleichen mehr umfassen. Auch eine Zufuhr eines Brenngases (beispielsweise Erdgas) und/oder von Sauerstoff ist möglich. Die Ermittlung kann beispielsweise anhand des Temperaturverlaufs als Funktion der Zeit (gerechnet oder gemessen) und/oder des zeitlichen Verlaufs mindestens eines Flickerspektrums oder THD-Spektrums (THD = Total Harmonic Distortion) oder anderen, auch akustischen, Schwingungsspektrums erfolgen. Bekannte Zeitprofile für die Schmelze ähnlicher Randbedingungen können abgleichend zur Erhöhung der Wahrscheinlichkeit der von der Künstlichen Intelligenz 9 ermittelten Aussage genutzt werden.

Es ist auch möglich, der Künstlichen Intelligenz 9 anlagenübergreifend dimensionale Daten (und ergänzend oftmals auch nicht-dimensionale Daten) zuzuführen, beispielsweise sowohl Daten von einem Hochofen oder einem Lichtbogenofen als auch Daten von einem Pfannenofen als auch Daten von einer Stranggießanlage als auch Daten von einem Walzwerk. Dadurch kann durch die Künstliche Intelligenz 9 sogar anlagenübergreifend eine Optimierung des Betriebs erfolgen. Auch ist es möglich, der Künstlichen Intelligenz 9 zusätzlich zu den dimensionalen Daten (und gegebenenfalls auch nicht-dimensionalen Daten) der jeweiligen Anlage der Grundstoffindustrie vergleichbare Daten einer anderen Anlage der Grundstoffindustrie zuzuführen und zusätzlich auch diese durch die Künstliche Intelligenz 9 auswerten zu lassen.

Die Künstliche Intelligenz 9 ist in der Praxis oftmals in ein umfassendes Datenverarbeitungskonzept eingebunden. Dies wird nachstehend in Verbindung mit FIG 11 näher erläutert.

Eine Gesamtintelligenz 16 kann eine einzelne Künstliche Intelligenz 9 oder, wie in FIG 11 dargestellt, mehrere Künstliche Intelligenzen 9 umfassen. Die einzelnen Künstlichen Intelligenzen 9 können so wie vorstehend erläutert ausgebildet sein. Es sind prinzipiell beliebige Kombinationen verschiedener Ausgestaltungen Künstlicher Intelligenzen 9 möglich. Die in FIG 11 gezeigte Ausbildung der Künstlichen Intelligenzen 9 als neuronale Netze ist also nur beispielhaft. Die künstlichen Intelligenzen 9 können entsprechend der Darstellung FIG 11 einander parallelgeordnet sein. Zusätzlich können innerhalb der Gesamtintelligenz 16 weitere Komponenten 17 vorhanden sein, beispielsweise ein Modell oder ein regelbasiertes System. Es ist möglich, die Daten (dies gilt zwar nicht nur, wohl aber auch für die dimensionalen Daten) vor dem Zuführen zur Gesamtintelligenz 16 in einer Vorverarbeitungseinrichtung 18 vorzuverarbeiten. Die Vorverarbeitung kann beispielsweise eine Filterung oder eine statische oder dynamische Mittelwertbildung sein. Auch können eine Fehlerkorrektur, eine Normierung und/oder eine Strukturierung der Eingangsdaten erfolgen. Weiterhin kann der Gesamtintelligenz 16 eine Auswertungseinrichtung 19 nachgeordnet sein. In diesem Fall erfolgt anhand der mittels der Gesamtintelligenz 16 ermittelten Ergebnisse eine weitergehende Auswertung. Diese Auswertung muss als solche nicht den Anforderungen genügen, die an eine Künstliche Intelligenz gestellt werden. Weiterhin kann der Gesamtintelligenz 16 - zusätzlich oder alternativ zur Auswertungseinrichtung 19 - eine Optimierungseinrichtung 20 nach geordnet sein. Mittels der Optimierungseinrichtung 20 können beispielsweise mehrere gleichartige Ergebnisse der Gesamtintelligenz 16 miteinander verglichen und weiter im Sinne einer Optimierung ausgewertet werden. Die Steuerung der Gesamtanordnung von FIG 11 erfolgt durch eine Datenflusssteuereinrichtung 21.

Zusammengefasst betrifft die vorliegende Erfindung somit folgenden Sachverhalt:

Ein Automatisierungssystem 1 ermittelt Steuerdaten S', gibt diese an gesteuerte Elemente 5 der Anlage ANL aus und steuert dadurch die Anlage ANL. Sensoreinrichtungen 2 erfassen Messdaten M der Anlage ANL, die sie zumindest teilweise dem Automatisierungssystem 1 und einer Mensch-Maschine-Schnittstelle 3 zuführen. Die Mensch-Maschine-Schnittstelle 3 nimmt weiterhin Planungsdaten (P) eines Produktionsplanungssystems (11) und/oder von dem Automatisierungssystem 1 Steuerdaten S' und/oder interne Daten I entgegen. Sie gibt die Daten M, S', I an eine Person 4 aus. Weiterhin nimmt sie von der Person 4 Steuerbefehle S entgegen und leitet sie an das Automatisierungssystem 1 weiter. Das Automatisierungssystem 1 verarbeitet die Messdaten M und die Steuerbefehle S im Rahmen der Ermittlung der Steuerdaten S'. Eine Künstliche Intelligenz 9 nimmt die Messdaten M, die Steuerdaten S' und/oder die internen Daten I und die an die Person 4 ausgegebenen Daten zumindest teilweise entgegen. Sie nimmt ferner die Steuerbefehle S entgegen. Die Künstliche Intelligenz 9 ermittelt unter Verwertung der von ihr entgegengenommenen Daten M, S', I und Befehle S Auswertungsergebnisse A und stellt diese der Person 4 und/oder dem Produktionsplanungssystem 11 zur Verfügung und/ oder gibt direkt oder über die Mensch-Maschine-Schnittstelle 3 die Auswertungsergebnisse A dem Automatisierungssystem 1 in Form von Steuerbefehlen S" vor. Die von der Künstlichen Intelligenz 9 entgegengenommenen Daten M, S', I sind zumindest teilweise dimensionale Daten.

Die vorliegende Erfindung weist viele Vorteile auf. So wird insbesondere die Robustheit des Anlagenbetriebes erhöht. Die Produktivität und die Produktqualität werden auf einem hohen Niveau gewährleistet. Die im Stand der Technik erforderlichen manuellen Steuereingriffe der Person 4 werden reduziert. Im Idealfall können sie sogar vollständig entfallen. Durch die erfindungsgemäße Vorgehensweise wird zusätzlich auch die psychische Belastung der Person 4 verringert. Es besteht daher eine geringere Gefahr einer Fehlbedienung durch die Person 4. Die Erfindung ist nicht nur bei neuen Anlagen ANL realisierbar, sondern kann auch bei bestehenden Anlagen ANL nachgerüstet werden. Es kann nicht mehr geschehen, dass durch einen Generationswechsel des Bedienpersonals Wissen über die Bedienung und den Betrieb der Anlage ANL der Grundstoffindustrie verloren geht. Dies gilt auch bei Wissen, das im Stand der Technik bei wenigen erfahrenen Bedienpersonen 4 akkumuliert ist, ansonsten aber nicht dokumentiert ist. Eine Inbetriebnahme einer neuen Anlage ANL ist beispielsweise oftmals schneller möglich. Weiterhin können auch Mitarbeiter geringeren Kenntnissen der Anlage ANL eingesetzt werden. Weiterhin können Mitarbeiter auch schneller angelernt werden. Die Zeit, innerhalb derer auf veränderte Betriebsbedingungen reagiert wird, wird oftmals verkürzt. Schließlich ist der Personalaufwand insgesamt deutlich reduziert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Automatisierungssystem
- 2: Sensoreinrichtungen
- 3: Mensch-Maschine Schnittstelle
- 4: Person
- 5: gesteuerte Elemente der Anlage
- 6: Recheneinrichtung
- 7: Computerprogramm
- 8: Maschinencode
- 9: Künstliche Intelligenz
- 10: eigenständige Ausgabeeinrichtung
- 11: Produktionsplanungssystem
- 12: Kurven gleichen Wertes
- 13: Gradienten
- 14: Metallband
- 15: Walzgerüste
- 16: Gesamtintelligenz
- 17: weitere Komponenten
- 18: Vorverarbeitungseinrichtung
- 19: Auswertungseinrichtung
- 20: Optimierungseinrichtung
- 21: Datenflusssteuereinrichtung

- A: Auswertungsergebnisse
- ANL: Anlage
- a: Ausgangsneuronen
- B: Bewertung
- C: Bestätigungsbefehl
- D: Daten
- e: Eingangsneuronen
- I: interne Daten
- L: Ballenlänge
- M: Messdaten
- n: verborgene Neuronen
- P: Planungsdaten
- R: Grundradius
- S, S": Steuerbefehle
- S': Steuerdaten
- s: Schichten
- S1 bis S6: Strategien
- V1 bis V4: Vorhersagen

- δR: Balligkeit

## Patentansprüche

1. Betriebsverfahren für eine Anlage (ANL) der Grundstoffindustrie,
- wobei ein Automatisierungssystem (1) Steuerdaten (S') ermittelt und an gesteuerte Elemente (5) der Anlage (ANL) ausgibt und die Anlage (ANL) dadurch steuert und/oder überwacht,
- wobei Sensoreinrichtungen (2) Messdaten (M) der Anlage (ANL) erfassen,
- wobei das Automatisierungssystem (1) die Messdaten (M) zumindest teilweise entgegennimmt und die entgegengenommenen Messdaten (M) im Rahmen der Ermittlung der Steuerdaten (S') berücksichtigt,
- wobei eine Mensch-Maschine-Schnittstelle (3) Messdaten (M) der Sensoreinrichtungen (2) und/oder Daten (S', I) des Automatisierungssystems (1) und/oder Planungsdaten (P) eines Produktionsplanungssystems (11) an eine Person (4) ausgibt und/oder von der Person (4) Steuerbefehle (S) entgegennimmt und an das Automatisierungssystem (1) weiterleitet,
- wobei das Automatisierungssystem (1) die weitergeleiteten Steuerbefehle (S) im Rahmen der Ermittlung der Steuerdaten (S') berücksichtigt,
- wobei eine Künstliche Intelligenz (9) von den Sensoreinrichtungen (2) die Messdaten (M) der Anlage (ANL) und vom Automatisierungssystem (1) die Steuerdaten (S') und/oder interne Daten (I) des Automatisierungssystems (1) und von der Mensch-Maschine-Schnittstelle (3) die an die Person (4) ausgegebenen Daten zumindest teilweise entgegennimmt und von der Mensch-Maschine-Schnittstelle (3) oder dem Automatisierungssystem (1) die Steuerbefehle (S) entgegennimmt,
- wobei die Künstliche Intelligenz (9) unter Verwertung der entgegengenommenen Daten (M, S', I) und Befehle (S) Auswertungsergebnisse (A) ermittelt und die Auswertungsergebnisse (A) über die Mensch-Maschine-Schnittstelle (3) und/oder eine eigenständige Ausgabeeinrichtung (10) der Person (4) zur Verfügung stellt und/oder dem Produktionsplanungssystem (11) zur Verfügung stellt und/oder direkt oder über die Mensch-Maschine-Schnittstelle (3) dem Automatisierungssystem (1) in Form von Steuerbefehlen (S") vorgibt,
**dadurch gekennzeichnet,**
**dass** die von der Künstlichen Intelligenz (9) entgegengenommenen Daten (M, S', I) zumindest teilweise dimensionale Daten sind.

2. Betriebsverfahren nach Anspruch 1,
**dadurch gekennzeichnet,**
**dass** die dimensionalen Daten (M, S', I) sich in mindestens zwei Dimensionen - insbesondere in mindestens zwei örtlichen Dimensionen - erstrecken und dass die Künstliche Intelligenz (9) im Rahmen der Ermittlung der Auswertungsergebnisse (A) für die dimensionalen Daten (M, S', I) Kurven gleichen Wertes (12) und/oder Gradienten (13) ermittelt.

3. Betriebsverfahren nach Anspruch 1 oder 2,
**dadurch gekennzeichnet,**
**dass** die dimensionalen Daten (M, S', I) ein von einer Sensoreinrichtung (2) erfasstes Bild oder ein über die Mensch-Maschine-Schnittstelle (3) an die Person (4) ausgegebenes Bild, eine zeitliche Sequenz derartiger Bilder, einen Teil eines derartigen Bildes oder eine zeitliche Sequenz eines derartigen Teils umfassen.

4. Betriebsverfahren nach Anspruch 1, 2 oder 3,
**dadurch gekennzeichnet,**
**dass** die dimensionalen Daten (M, S', I) eine akustische Schwingung oder ein Spektrum einer akustischen Schwingung umfassen.

5. Betriebsverfahren nach einem der obigen Ansprüche,
**dadurch gekennzeichnet,**
**dass** die dimensionalen Daten (M, S', I) vom Automatisierungssystem (1) anhand eines Modells errechnete Daten umfassen.

6. Betriebsverfahren nach einem der obigen Ansprüche,
**dadurch gekennzeichnet,**
**dass** die Künstliche Intelligenz (9) als künstliches neuronales Netz - insbesondere als tiefes neuronales Netz und/oder als faltendes neuronales Netz - und/oder als Stützvektormaschine und/oder als Entscheidungsbaum und/oder als Bayes'sches Zuverlässigkeitsnetzwerk und/oder als sich selbst organisierende Karte und/oder als fallorientierte Überlegung und/oder als fallorientiertes Lernen und/oder als sogenanntes hidden Markov-Modell und/oder als sogenannte k-nächste Nachbarn ausgebildet ist.

7. Betriebsverfahren nach einem der obigen Ansprüche,
**dadurch gekennzeichnet,**
**dass** die Künstliche Intelligenz (9) parallel zur Ermittlung der Auswertungsergebnisse (A) eine Bewertung (B) der Auswertungsergebnisse (H) ermittelt und sich selbst anhand der Bewertung (B) nachtrainiert.

8. Betriebsverfahren nach einem der obigen Ansprüche,
**dadurch gekennzeichnet,**
**dass** die von der Künstlichen Intelligenz (9) entgegengenommenen Daten (M, S', I) und/oder deren Bezug in der Dimension einheitslos sind oder von der Künstlichen Intelligenz (9) in derartige Daten umgewandelt werden.

9. Betriebsverfahren nach einem der obigen Ansprüche,
**dadurch gekennzeichnet,**
**dass** die von der Künstlichen Intelligenz (9) entgegengenommenen Daten (M, S', I)
- ein Profil eines flachen Walzguts vor einer Ausführung einer Mehrzahl von Walzstichen, mit denen ein flaches Walzgut nacheinander gewalzt wird,
- für die Mehrzahl an Walzstichen die jeweiligen Stichplandaten und die jeweilige Kontur des Walzspaltes und/oder der Walzenballen der Arbeitswalzen des den jeweiligen Walzstich ausführenden Walzgerüsts sowie
- Profil und/oder Planheit des flachen Walzguts nach der Ausführung der Mehrzahl von Walzstichen
umfassen und dass die von der Künstlichen Intelligenz (9) ermittelten Auswertungsergebnisse (A) eine Strategie (S1) zum Verschieben der Arbeitswalzen und/oder von Zwischenwalzen der die jeweiligen Walzstiche ausführenden Walzgerüste für einen nachfolgenden Walzvorgang eines weiteren flachen Walzguts umfassen.

10. Betriebsverfahren nach einem der obigen Ansprüche,
**dadurch gekennzeichnet,**
**dass** die von der Künstlichen Intelligenz (9) entgegengenommenen Daten (M, S', I)
- für eine Mehrzahl von Walzgerüsten, mittels derer ein flaches Walzgut nacheinander gewalzt wird, die jeweiligen Stichplandaten und die jeweilige Kontur des Walzspaltes des jeweiligen Walzgerüsts und/oder der Walzenballen der Arbeitswalzen des jeweiligen Walzgerüsts sowie
- Profil und/oder Planheit des flachen Walzguts nach dem Durchlaufen der Mehrzahl von Walzgerüsten
umfassen und dass die von der Künstlichen Intelligenz (9) ermittelten Auswertungsergebnisse (A) eine Strategie (S2) zum segmentierten Kühlen von Walzen mindestens eines der Walzgerüste und/oder eine Strategie (S3) für eine Arbeitswalzenverschiebung und/oder eine Strategie (S4) für eine Arbeitswalzenrückbiegung umfassen.

11. Betriebsverfahren nach einem der obigen Ansprüche,
**dadurch gekennzeichnet,**
**dass** die von der Künstlichen Intelligenz (9) entgegengenommenen Daten (M, S', I) mindestens ein Bild, anhand dessen die laterale Position eines Metallbandes (14) zwischen zwei Walzgerüsten (15) einer mehrgerüstigen Walzstraße ermittelbar ist, und eine Differenzstellgröße des stromaufwärts gelegenen der beiden Walzgerüste (15) umfassen und dass die von der Künstlichen Intelligenz (9) ermittelten Auswertungsergebnisse (A) eine Strategie (S5) zum Steuern des Bandlaufs umfassen.

12. Betriebsverfahren nach einem der obigen Ansprüche,
**dadurch gekennzeichnet,**
**dass** die von der Künstlichen Intelligenz (9) entgegengenommenen Daten (M, S', I) einen Verschleiß eines Bauelements der Anlage (ANL) der Grundstoffindustrie beschreibende dimensionale Daten umfassen und dass die von der Künstlichen Intelligenz (9) ermittelten Auswertungsergebnisse (A) eine Vorhersage (V1) einer Restlaufzeit des Bauelements der Anlage (ANL) der Grundstoffindustrie umfassen.

13. Betriebsverfahren nach Anspruch 12,
**dadurch gekennzeichnet,**
**dass** das Bauelement eine Arbeitswalze eines Walzgerüsts ist und dass die von der Künstlichen Intelligenz (9) entgegengenommenen Daten (M, S', I) eine Walzenballenkontur als Funktion der Walzenreise der Arbeitswalze sowie die Stichplandaten des Walzgerüsts umfassen.

14. Betriebsverfahren nach einem der obigen Ansprüche,
**dadurch gekennzeichnet,**
**dass** die von der Künstlichen Intelligenz (9) entgegengenommenen Daten (M, S', I)
- mindestens einen Massenstrom und/oder mindestens einen Volumenstrom eines einem Konvertergefäß zugeführten Stoffes als Funktion der Zeit,
- eine Position einer im Konvertergefäß befindlichen Lanze als Funktion der Zeit,
- eine Kühlwassertemperatur des Konverters als Funktion der Zeit,
- eine Menge und/oder eine Zusammensetzung eines aus dem Konvertergefäß austretenden Abgases als Funktion der Zeit,
- mindestens eine aus dem Bereich des Konvertergefäßes stammende akustische Schwingung und/oder deren Spektrum,
- mindestens ein den Bereich eines Konverterhutes enthaltenes Bild,
- dimensionale Modelldaten aus einem physikalisch-chemischen Modell eines im Konvertergefäß befindlichen Metalls und/oder hiermit korrespondierend vorab bestimmte Vergleichsdaten und/oder
- eine ortsaufgelöste Darstellung eines Konverterfutterzustands
umfassen und dass die von der Künstlichen Intelligenz (9) ermittelten Auswertungsergebnisse (A) eine Vorhersage (V2 bis V4) über eine Wahrscheinlichkeit, einen Zeitpunkt, ein Ausmaß eines zu erwartenden Auswurfs aus dem Konvertergefäß, einen zu erwartenden Endgehalt an Sauerstoff und/oder Kohlenstoff des im Konvertergefäß befindlichen Metalls, eine für einen Abstichzeitpunkt prognostizierte Temperatur des im Konvertergefäß befindlichen Metalls, ein Ergebnis eines im Konvertergefäß erfolgenden Entphosphorungsprozesses und/oder metallurgische Größen während eines Blasvorgangs innerhalb des Konvertergefäßes umfassen.

15. Betriebsverfahren nach einem der obigen Ansprüche,
**dadurch gekennzeichnet,**
**dass** die der Künstlichen Intelligenz (9) zugeführten dimensionalen Daten (M, S', I) vor dem Zuführen zur Künstlichen Intelligenz (9) in einer Vorverarbeitungseinrichtung (18) vorverarbeitet werden und/oder dass die von der Künstlichen Intelligenz (9) ermittelten Auswertungsergebnisse (A) zunächst in einer Auswertungseinrichtung (19) ausgewertet werden und/oder mittels einer Optimierungseinrichtung (20) die Auswertungsergebnisse (A) im Sinne einer Optimierung ausgewertet werden und erst dann der Person (4) und/oder dem Produktionsplanungssystem (11) zur Verfügung gestellt und/oder dem Automatisierungssystem (1) vorgegeben werden.

16. Computerprogramm, das Maschinencode (8) umfasst, der von einer Recheneinrichtung (6) abarbeitbar ist, wobei die Abarbeitung des Maschinencodes (8) durch die Recheneinrichtung (6) bewirkt, dass die Recheneinrichtung (6) eine Künstliche Intelligenz (9) implementiert, die
- Messdaten (M), die von Sensoreinrichtungen (2) einer Anlage (ANL) der Grundstoffindustrie im Betrieb der Anlage (ANL) der Grundstoffindustrie erfasst werden, Steuerdaten (S') und/oder interne Daten (I), die von einem die Anlage (ANL) der Grundstoffindustrie steuernden und/oder überwachenden Automatisierungssystem (1) ermittelt und im Falle der Steuerdaten (S') zur Steuerung der Anlage (ANL) der Grundstoffindustrie an gesteuerte Elemente (5) der Anlage (ANL) der Grundstoffindustrie ausgegeben werden, und von einer Mensch-Maschine-Schnittstelle (3) der Anlage (ANL) der Grundstoffindustrie an eine Person (4) ausgegebene Daten zumindest teilweise entgegennimmt,
- von der Mensch-Maschine-Schnittstelle (3) oder dem Automatisierungssystem (1) von der Mensch-Maschine-Schnittstelle (3) an das Automatisierungssystem (1) weitergeleite Steuerbefehle (S) entgegennimmt,
- unter Verwertung der entgegengenommenen Daten (M, S', I) und Befehle (S) Auswertungsergebnisse (A) ermittelt und die Auswertungsergebnisse (A) über die Mensch-Maschine-Schnittstelle (3) und/oder eine eigenständige Ausgabeeinrichtung (10) der Person (4) zur Verfügung stellt und/oder einem Produktionsplanungssystem (11) für die Anlage (ANL) der Grundstoffindustrie zur Verfügung stellt und/oder direkt oder über die Mensch-Maschine-Schnittstelle (3) dem Automatisierungssystem (1) in Form von Steuerbefehlen (S") vorgibt,
**dadurch gekennzeichnet,**
**dass** die von der Künstlichen Intelligenz (9) entgegengenommenen Daten (M, S', I) zumindest teilweise dimensionale Daten sind.

17. Computerprogramm nach Anspruch 16,
**dadurch gekennzeichnet,**
**dass** die Abarbeitung des Maschinencodes (8) durch die Recheneinrichtung (6) bewirkt, dass die von der Recheneinrichtung (6) implementierte Künstliche Intelligenz (9) die zusätzlichen Merkmale mindestens eines der Ansprüche 2 bis 15 implementiert.

18. Recheneinrichtung, wobei die Recheneinrichtung mit einem Computerprogramm (7) nach Anspruch 16 oder 17 programmiert ist und zur Übermittlung von Informationen zumindest mit einem Automatisierungssystem (1), Sensoreinrichtungen (2) und einer Mensch-Maschine-Schnittstelle (3) einer Anlage (ANL) der Grundstoffindustrie verbunden ist.

19. Anlage der Grundstoffindustrie,
- wobei die Anlage ein Automatisierungssystem (1) aufweist, das Steuerdaten (S') ermittelt und an gesteuerte Elemente (5) der Anlage ausgibt und die Anlage dadurch steuert und/oder überwacht,
- wobei die Anlage Sensoreinrichtungen (2) aufweist, die Messdaten (M) der Anlage erfassen,
- wobei das Automatisierungssystem (1) die Messdaten (M) zumindest teilweise entgegennimmt und die entgegengenommenen Messdaten (M) im Rahmen der Ermittlung der Steuerdaten (S') berücksichtigt,
- wobei die Anlage eine Mensch-Maschine-Schnittstelle (3) aufweist, die Messdaten (M) der Sensoreinrichtungen (2) und/oder Daten (S', I) des Automatisierungssystems (1) an eine Person (4) ausgibt und/oder von der Person (4) Steuerbefehle (S) entgegennimmt und an das Automatisierungssystem (1) weiterleitet,
- wobei das Automatisierungssystem (1) die weitergeleiteten Steuerbefehle (S) im Rahmen der Ermittlung der Steuerdaten (S') berücksichtigt,
- wobei die Anlage eine Recheneinrichtung (6) nach Anspruch 18 aufweist.
